(19) Europäisches Patentamt
European Patent Office
Office européen des brevets

(11) **EP 3 868 610 A1**

(12) **EUROPEAN PATENT APPLICATION**
published in accordance with Art. 153(4) EPC

(43) Date of publication:
**25.08.2021 Bulletin 2021/34**

(51) Int Cl.:
***B60R 16/037*** (2006.01)    ***B60N 2/02*** (2006.01)

(21) Application number: **19872497.3**

(22) Date of filing: **18.10.2019**

(86) International application number:
**PCT/CN2019/111930**

(87) International publication number:
**WO 2020/078463 (23.04.2020 Gazette 2020/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.10.2018 CN 201811224337**

(71) Applicant: **Shanghai Sensetime Intelligent
Technology Co.,
Ltd.
Shanghai 200233 (CN)**

(72) Inventors:
• **LIANG, Guanhua**
  **Shanghai 200233 (CN)**
• **YI, Chengming**
  **Shanghai 200233 (CN)**
• **WEI, Yang**
  **Shanghai 200233 (CN)**

(74) Representative: **Lavoix**
  **Bayerstraße 83**
  **80335 München (DE)**

(54) **DRIVING ENVIRONMENT SMART ADJUSTMENT AND DRIVER SIGN-IN METHODS AND APPARATUSES, VEHICLE, AND DEVICE**

(57)    Embodiments of the present disclosure disclose a method and apparatus for intelligent adjustment of a driving environment, a method and apparatus for driver registration, a vehicle, and a device. The method includes: extracting a face feature of a driver's image captured by a vehicle-mounted camera; authenticating the extracted face feature based on at least one pre-stored registered face feature; in response to successful face feature authentication, determining driving environment personalization information corresponding to the registered face feature corresponding to the face feature; and sending the driving environment personalization information to a vehicle provided with the vehicle-mounted camera, or controlling the vehicle to adjust the driving environment according to the driving environment personalization information.

FIG. 1

EP 3 868 610 A1

**Description**

The present application claims priority to Chinese Patent Application No. CN201811224337.5, filed with the Chinese Patent Office on October 19, 2018 and entitled "METHOD AND APPARATUS FOR INTELLIGENT ADJUSTMENT OF DRIVING ENVIRONMENT, METHOD AND APPARATUS FOR DRIVER REGISTRATION, VEHICLE, AND DEVICE", which is hereby incorporated by reference in its entirety.

**Technical Field**

The present disclosure relates to computer vision technologies, and in particular, to a method and apparatus for intelligent adjustment of a driving environment, a method and apparatus for driver registration, a vehicle, and a device.

**Background**

With the large-scale popularization of vehicles, in order to improve the comfort level of a driver, the prior art proposes personalizing the driver to provide a more comfortable driving environment for the driver.

**Summary**

Embodiments of the present disclosure provide technical solutions for intelligent adjustment of a driving environment and driver registration.

A method for intelligent adjustment of a driving environment provided according to one aspect of the embodiments of the present disclosure includes:

extracting a face feature of a driver's image captured by a vehicle-mounted camera;
authenticating the extracted face feature based on at least one pre-stored registered face feature;
in response to successful face feature authentication, determining driving environment personalization information corresponding to the registered face feature corresponding to the face feature according to a correspondence between the pre-stored registered face feature and the driving environment personalization information; and
sending the driving environment personalization information to a vehicle provided with the vehicle-mounted camera, or controlling the vehicle to adjust the driving environment according to the driving environment personalization information.

A method for driver registration provided according to another aspect of the embodiments of the present disclosure includes:

acquiring a driver's image;
extracting a face feature of the image;
acquiring driving environment parameter setting information; and
storing the extracted face feature as a registered face feature, storing the driving environment parameter setting information as driving environment personalization information of the registered face feature, and establishing and storing a correspondence between the registered face feature and the driving environment personalization information.

An apparatus for intelligent adjustment of a driving environment provided according to another aspect of the embodiments of the present disclosure includes:

a feature extraction unit, configured to extract a face feature of a driver's image captured by a vehicle-mounted camera;
a face feature authentication unit, configured to authenticate the extracted face feature based on at least one pre-stored registered face feature;
an environmental information acquisition unit, configured to, in response to successful face feature authentication, determine driving environment personalization information corresponding to the registered face feature corresponding to the face feature according to a correspondence between the pre-stored registered face feature and the driving environment personalization information; and
an information processing unit, configured to send the driving environment personalization information to a vehicle provided with the vehicle-mounted camera, or to control the vehicle to adjust the driving environment according to the driving environment personalization information.

An apparatus for driver registration provided according to another aspect of the embodiments of the present disclosure includes:

> an image acquisition module, configured to acquire a driver's image;
> a face feature extraction module, configured to extract a face feature of the image;
> a parameter information acquisition module, configured to acquire driving environment parameter setting information; and
> a registration information storage module, configured to store the extracted face feature as a registered face feature, store the driving environment parameter setting information as driving environment personalization information of the registered face feature, and establish and store a correspondence between the registered face feature and the driving environment personalization information.

A vehicle provided according to another aspect of the embodiments of the present disclosure includes: the apparatus for intelligent adjustment of a driving environment according to any one of the foregoing embodiments or the apparatus for driver registration according to any one of the foregoing embodiments.

An electronic device provided according to another aspect of the embodiments of the present disclosure includes: a processor, where the processor includes the apparatus for intelligent adjustment of a driving environment according to any one of the foregoing embodiments or the apparatus for driver registration according to any one of the foregoing embodiments.

An electronic device provided according to another aspect of the embodiments of the present disclosure includes: a memory, configured to store executable instructions;

and a processor, configured to communicate with the memory to execute the executable instructions so as to complete the method for intelligent adjustment of a driving environment according to any one of the foregoing embodiments or the method for driver registration according to any one of the foregoing embodiments.

A computer storage medium provided according to another aspect of the embodiments of the present disclosure is configured to store computer-readable instructions, where when the instructions are executed, operations of the method for intelligent adjustment of a driving environment according to any one of the foregoing embodiments or the method for driver registration according to any one of the foregoing embodiments are performed.

A computer program product provided according to another aspect of the embodiments of the present disclosure includes a computer-readable code, where when the computer-readable code runs in a device, a processor in the device executes instructions for implementing the method for intelligent adjustment of a driving environment according to any one of the foregoing embodiments or the method for driver registration according to any one of the foregoing embodiments.

Based on the method and apparatus for intelligent adjustment of a driving environment, the method and apparatus for driver registration, the vehicle, and the device provided in the foregoing embodiments of the present disclosure, a face feature of a driver's image captured by a vehicle-mounted camera is extracted; the extracted face feature is authenticated based on at least one pre-stored registered face feature; in response to successful face feature authentication, driving environment personalization information corresponding to the registered face feature corresponding to the face feature is determined according to a correspondence between the pre-stored registered face feature and the driving environment personalization information; and the driving environment personalization information is sent to a vehicle provided with the vehicle-mounted camera, or the vehicle is controlled to adjust the driving environment according to the driving environment personalization information. By taking a face feature as a registration and/or authentication means of personalized intelligent configuration of a driving environment, the present disclosure improves the accuracy of authentication and the safety of a vehicle, implements intelligent personalized configuration based on comparison of face features, helps protect driver's privacy, and also improves driving comfort, intelligence and user experience.

The following further describes in detail the technical solutions of the present disclosure with reference to the accompanying drawings and embodiments.

## Brief Description of the Drawings

The accompanying drawings constituting a part of the specification describe the embodiments of the present disclosure and are intended to explain the principles of the present disclosure together with the descriptions.

According to the following detailed descriptions, the present disclosure can be understood more clearly with reference to the accompanying drawings.

FIG. 1 is one schematic flowchart of a method for intelligent adjustment of a driving environment provided in the embodiments of the present disclosure.

FIG. 2 is another schematic flowchart of a method for intelligent adjustment of a driving environment provided in the embodiments of the present disclosure.

FIG. 3 is a schematic diagram of setting of driving environment personalization information in an optional example of a method for intelligent adjustment of a driving environment provided in the embodiments of the present disclosure.

FIG. 4 is a schematic flowchart of setting of driving environment parameters in other embodiments of a method for intelligent adjustment of a driving environment provided in the embodiments of the present disclosure.

FIG. 5 is a reference diagram of positions of an on-board unit coordinate system and a camera coordinate system.

FIG. 6 is a schematic result diagram of translating spatial points of a camera coordinate system to an on-board unit coordinate system.

FIG. 7 is a schematic diagram of simplifying a camera coordinate system and an on-board unit coordinate system during seat adjustment.

FIG. 8 is a schematic diagram of rotating coordinate points $(x\_1, z\_1)$ in a camera coordinate system to coordinate points $(x\_0, z\_0)$ in an on-board unit coordinate system.

FIG. 9 is part of a schematic flowchart of an optional example of intelligent adjustment of a driving environment provided in the embodiments of the present disclosure.

FIG. 10 is a system schematic diagram of another optional example of a method for intelligent adjustment of a driving environment provided in the embodiments of the present disclosure.

FIG. 11 is one schematic structural diagram of an apparatus for intelligent adjustment of a driving environment provided in the embodiments of the present disclosure.

FIG. 12 is one schematic flowchart of a method for driver registration provided in embodiments of the present disclosure.

FIG. 13 is one schematic structural diagram of an apparatus for driver registration provided in embodiments of the present disclosure.

FIG. 14 is a schematic structural diagram of an electronic device suitable for implementing a terminal device or a server according to the embodiments of the present disclosure.

## Detailed Description

Various exemplary embodiments of the present disclosure are now described in detail with reference to the accompanying drawings. It should be noted that, unless otherwise stated specifically, relative arrangement of the components and operations, the numerical expressions, and the values set forth in the embodiments are not intended to limit the scope of the present disclosure.

In addition, it should be understood that, for ease of description, the size of each part shown in the accompanying drawings is not drawn in actual proportion.

The following descriptions of at least one exemplary embodiment are merely illustrative actually, and are not intended to limit the present disclosure and the applications or uses thereof.

Technologies, methods and devices known to a person of ordinary skill in the related art may not be discussed in detail, but such technologies, methods and devices should be considered as a part of the specification in appropriate situations.

It should be noted that similar reference numerals and letters in the following accompanying drawings represent similar items. Therefore, once an item is defined in an accompanying drawing, the item does not need to be further discussed in the subsequent accompanying drawings.

The embodiments of the present disclosure may be applied to a computer system/server, which may operate with numerous other general-purpose or special-purpose computing system environments or configurations. Examples of well-known computing systems, environments, and/or configurations suitable for use together with the computer system/server include, but are not limited to, vehicle-mounted devices, personal computer systems, server computer systems, thin clients, thick clients, handheld or laptop devices, microprocessor-based systems, set top boxes, programmable consumer electronics, network personal computers, small computer systems, large computer systems, distributed cloud computing environments that include any one of the foregoing systems, and the like.

The computer system/server may be described in the general context of computer system executable instructions (for example, program modules) executed by the computer system. Generally, the program modules may include routines, programs, target programs, assemblies, logics, data structures, and the like, to perform specific tasks or implement specific abstract data types. The computer system/server may be practiced in the distributed cloud computing environments in which tasks are performed by remote processing devices that are linked via a communication network. In the distributed computing environments, program modules may be located in local or remote computing system storage media including storage devices.

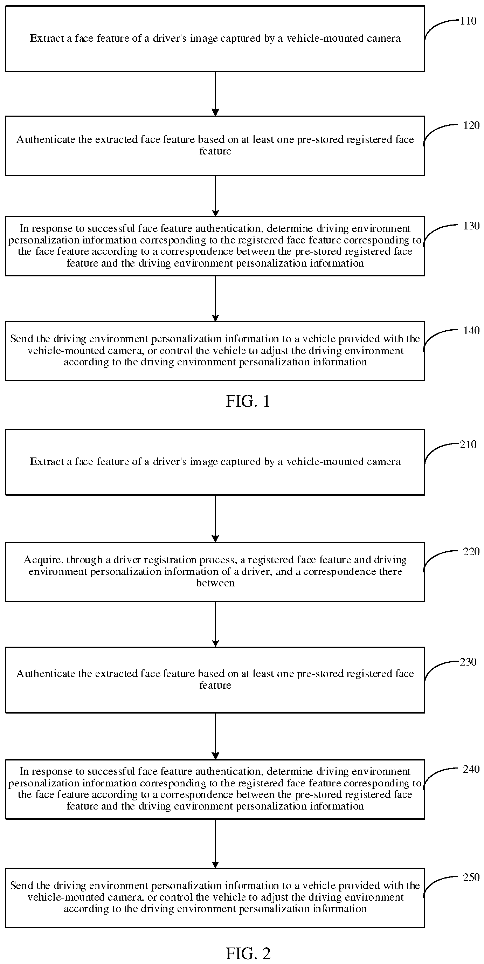

FIG. 1 is one schematic flowchart of a method for intelligent adjustment of a driving environment provided in the embodiments of the present disclosure. The method may be executed by any electronic device, such as a terminal device, a server, a mobile device, or a vehicle-mounted device. As shown in FIG. 1, the method according to the embodiments includes the following operations.

At operation 110, a face feature of a driver's image captured by a vehicle-mounted camera is extracted.

According to some embodiments, the driver's image may be obtained through a vehicle-mounted camera, where the vehicle-mounted camera may be a camera device installed inside a vehicle (such as the driver's compartment, a rear-view mirror, or a center console) or outside the vehicle (such as a vehicle pillar). Moreover, feature extraction may be implemented based on a neural network, feature extraction is performed on a driver's image via the neural network to obtain a face feature of a driver, and the face feature of the driver's image may also be extracted by other means. Specific means of capturing the driver's image and acquiring the face feature are not limited in the embodiments of the present disclosure. According to some embodiments, the neural networks in the embodiments of the present disclosure may each be a multi-layer neural network (i.e., a deep neural network), where the neural network may be a multi-layer convolutional neural network, for example, any neural network model such as LeNet, AlexNet, GoogLeNet, VGG, or ResNet. The neural networks may use neural networks of the same type and structure, or may use neural networks of different types and structures. No limitation is made thereto in the embodiments of the present disclosure.

In an optional example, operation 110 may be performed by a processor by invoking a corresponding instruction stored in a memory, or may be performed by a feature extraction unit 1101 run by the processor.

At operation 120, the extracted face feature is authenticated based on at least one pre-stored registered face feature.

According to some embodiments, a similarity between the face feature of the driver's image and the registered face feature is determined by recognition to determine whether a driver can pass the authentication; if the similarity between the face feature of the driver's image and a certain registered face feature reaches a preset threshold (the face feature and the registered face feature correspond to the same person), it can be considered that the face feature passes the authentication. According to some embodiments, the registered face feature may be received through a mobile application terminal or an on-board unit, and a registration process further includes acquiring driving environment personalization information corresponding to the registered face feature.

According to some embodiments, a vehicle may include one or more registered face features, and the registered face feature may be stored in the mobile application terminal, the on-board unit locally, or a cloud database to ensure that the registered face feature can be obtained during the authentication. According to some embodiments, a face image of a registered driver may be stored while the registered face feature is stored. Storing the registered face feature saves a storage space compared with storing the face image. The extracted face feature is a computer expression that can be recognized by a computer and used for representing the face feature, and it has been desensitized relative to the face image. Processing is performed based on the face feature, so as to protect physiological privacy information of the driver from leaking.

In an optional example, operation 120 may be performed by a processor by invoking a corresponding instruction stored in a memory, or may be performed by a face feature authentication unit 1102 run by the processor.

At operation 130, in response to successful face feature authentication, driving environment personalization information corresponding to the registered face feature corresponding to the face feature is determined according to a correspondence between the pre-stored registered face feature and the driving environment personalization information.

According to some embodiments, not only the registered face feature and the driving environment personalization information, but also the correspondence between the registered face feature and the driving environment personalization information are saved. Therefore, after face feature authentication is passed, the driving environment personalization information corresponding to the registered face feature, such as the light in the vehicle, the air-conditioning temperature in the vehicle, or the music style in the vehicle, may be acquired through the correspondence.

In an optional example, operation 130 may be performed by a processor by invoking a corresponding instruction stored in a memory, or may be performed by an environmental information acquisition unit 1103 run by the processor.

At operation 140, the driving environment personalization information is sent to a vehicle provided with the vehicle-mounted camera, or the vehicle is controlled to adjust the driving environment according to the driving environment personalization information.

According to some embodiments, when the driving environment personalization information is acquired through a server or mobile application terminal that communicates with the on-board unit, the vehicle cannot be set directly, and the driving environment personalization information may be sent to the vehicle. The setting of the vehicle is implemented through a vehicle-mounted device. When the driving environment personalization information is acquired through the vehicle-mounted device provided on the on-board unit, corresponding adjustment and control are performed on the vehicle according to the information. If the driver desires to change the set contents during use, the driver can reset the driving environment personalization information through a registration end (such as the mobile application terminal or the on-board unit), and the on-board unit receives directly or through a receiving cloud server the driving environment personalization information sent by the registration end, such that the driving environment personalization information can be adjusted in real time.

In an optional example, operation 140 may be performed by a processor by invoking a corresponding instruction stored in a memory, or may be performed by an information processing unit 1104 run by the processor.

Based on the method for intelligent adjustment of a driving environment provided in the foregoing embodiments of the present disclosure, a face feature of a driver's image captured by a vehicle-mounted camera is extracted; the extracted face feature is authenticated based on at least one pre-stored registered face feature; in response to successful face feature authentication, driving environment personalization information corresponding to the registered face feature corresponding to the face feature is determined according to a correspondence between the pre-stored registered face feature and the driving environment personalization information; and the driving environment personalization information is sent to a vehicle provided with the vehicle-mounted camera, or the vehicle is controlled to adjust the driving environment according to the driving environment personalization information. By taking a face feature as a registration and/or authentication means of personalized intelligent configuration of a driving environment, the present disclosure improves the accuracy of authentication and the safety of a vehicle, implements intelligent personalized configuration based on comparison of face features, helps protect driver's privacy, and also improves driving comfort, intelligence and user experience.

According to some embodiments, the driving environment personalization information may include, but may be not limited to, at least one of the following: temperature information, light information, music style information, seat state information, or loudspeaker setting information. According to some embodiments, one or more of the temperature information, the light information, the music style information, the seat state information, and the loudspeaker setting information in the vehicle may be set. In addition to the information listed above, a person skilled in the art should understand that other information that affects the driving environment is also driving environment personalization information that can be set in the present disclosure.

In one or more optional embodiments, the method further includes the following operation.

In response to a face feature authentication failure, registration application prompt information or authentication failure prompt information is provided.

According to some embodiments, when there is no registered face feature matching the face feature in registered face features, a requested device (the mobile application terminal, the on-board unit, or the like) may provide authentication failure prompt information, indicating that the driver has not registered the vehicle and cannot acquire the driving environment personalization information; or, the requested device may provide registration application prompt information to prompt the driver to perform registration, and the driver can obtain the driving environment personalization information after completing the registration.

FIG. 2 is another schematic flowchart of a method for intelligent adjustment of a driving environment provided in the embodiments of the present disclosure. As shown in FIG. 2, the method according to the embodiments of the present disclosure includes the following operations.

At operation 210, a face feature of a driver's image captured by a vehicle-mounted camera is extracted.

Operation 210 in the embodiments of the present disclosure is similar to operation 110 in the foregoing embodiments, and the operation may be understood with reference to the foregoing embodiments. Details are not described herein repeatedly.

At operation 220, a registered face feature and driving environment personalization information of a driver, and a correspondence therebetween are acquired through a driver registration process.

The sequence of operations 210 and 220 above can be adjusted. That is, operation 210 is performed first and then operation 220 is performed, or operation 220 is performed first and then operation 210 is performed.

According to some embodiments, the driver registration is implemented by acquiring the registered face feature and the driving environment personalization information of the driver, and the correspondence therebetween. The driver registration in the embodiments of the present disclosure is based on the registered face feature as unique identification information to improve the accuracy of registered driver identification and reduce the problem of faking generated based on other information, for example, gender, as identification information.

At operation 230, the extracted face feature is authenticated based on at least one pre-stored registered face feature.

Operation 230 in the embodiments of the present disclosure is similar to operation 120 in the foregoing embodiments, and the operation may be understood with reference to the foregoing embodiments. Details are not described herein repeatedly.

At operation 240, in response to successful face feature authentication, driving environment personalization information corresponding to the registered face feature corresponding to the face feature is determined according to a correspondence between the pre-stored registered face feature and the driving environment personalization information.

Operation 240 in the embodiments of the present disclosure is similar to operation 130 in the foregoing embodiments, and the operation may be understood with reference to the foregoing embodiments. Details are not described herein repeatedly.

At operation 250, the driving environment personalization information is sent to a vehicle provided with the vehicle-mounted camera, or the vehicle is controlled to adjust the driving environment according to the driving environment personalization information.

Operation 250 in the embodiments of the present disclosure is similar to operation 140 in the foregoing embodiments, and the operation may be understood with reference to the foregoing embodiments. Details are not described herein repeatedly.

In the embodiments of the present disclosure, before performing face feature authentication, driver registration is required to be performed so that the vehicle acquires at least one registered face feature, to ensure that the face feature can be authenticated after the face feature of the driver is acquired. According to some embodiments, a driver registration process includes:

acquiring a driver's image;
extracting a face feature of the image;
acquiring driving environment parameter setting information; and
storing the extracted face feature as the registered face feature, storing the driving environment parameter setting information as the driving environment personalization information of the registered face feature, and establishing and storing the correspondence between the registered face feature and the driving environment personalization information.

According to some embodiments, an image of a driver requesting for registration may be acquired through a mobile application terminal or an on-board unit. Both the mobile application terminal and the on-board unit are provided with a camera apparatus such as a camera. The driver's image is captured through the camera, face feature extraction is performed on the image to obtain a face feature, and driving environment parameter setting information input by the driver is received through a device, or driving parameter setting information set in the vehicle is extracted from the on-board unit. In order to ensure that registered face features have one-to-one correspondence to the driving environment personalization formation, during storage, correspondences between the registered face features and the driving environment personalization formation are also saved. When subsequent acquisition of the driving environment personalization formation is required, corresponding driving environment personalization formation can be obtained through the correspondences simply by face feature matching rather than a complicated process. Intelligent personalized configuration is implemented based on face features, and the driving environment personalization information is acquired quickly while driver's privacy is protected.

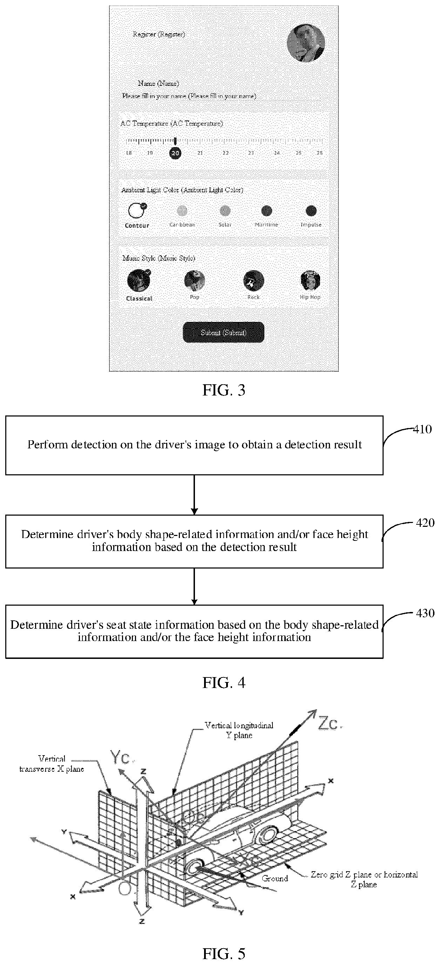

FIG. 3 is a schematic diagram of setting of driving environment personalization information in an optional example of a method for intelligent adjustment of a driving environment provided in the embodiments of the present disclosure. As shown in FIG. 3, driving environment personalization information is set on a mobile application terminal (such as a mobile phone or a tablet computer), and a registered face feature is taken as a unique identification mode, where the driving environment personalization information includes AC temperature, an ambient light color, and a music style. A face image of a registered driver can also be displayed on the mobile application terminal, and a name can also be set for the registered driver. The registration storage unit where the driving environment personalization information is located can be saved in the register of the mobile application terminal. The name can be modified, and after registration is completed, the name can also be modified. For example, if the name is A during the registration, it is modified as B after the registration. The above driving environment personalization information can be set, changed and saved. However, before performing an operation, the face feature needs to be authenticated. The operation can be performed only after authentication is passed.

According to some embodiments, acquiring the driver's image includes:
acquiring the driver's image through a mobile application terminal and/or a vehicle-mounted camera.

In the present embodiments, the driver's image may be acquired through the mobile application terminal and/or the vehicle-mounted camera. That is, when requesting for registration, the driver can select a convenient port by self for registration, can perform registration using the mobile application terminal (such as a mobile phone or a tablet computer), and can also perform registration through an on-board unit. During the registration through the on-board unit, the driver's image is captured through the vehicle-mounted camera. In this case, the vehicle-mounted camera can be set in front of the driver's seat, and the driving environment personalization information of the corresponding on-board unit can be acquired by the driver by inputting through an interaction device of the on-board unit or reading vehicle setting data through a vehicle-mounted device.

According to some embodiments, acquiring the driver's image through the mobile application terminal includes:

acquiring the driver's image from at least one image stored in the mobile application terminal, or
capturing the driver's image through a camera apparatus provided on the mobile application terminal.

In the present embodiments, the driver's image is acquired through the mobile application terminal. The mobile application terminal in the embodiments of the present disclosure includes, but is not limited to, a device having photographing and storage functions, such as a mobile phone or a tablet computer. Since the mobile application terminal has photographing and storage functions, the driver's image can be selected from images stored in the mobile application terminal, or captured through a camera on the mobile application terminal.

According to some embodiments, acquiring the driving environment parameter setting information includes: receiving the driving environment parameter setting information through the mobile application terminal and/or the vehicle-mounted device.

In the embodiments of the present disclosure, after the registered face feature is acquired, it is also required to obtain corresponding driving environment parameter setting information. Driving environment parameters include, but are not limited to, driving environment-related parameters such as the temperature, light, music style, seat state, or loudspeaker settings in the vehicle. These environmental parameters can be set by the driver by inputting through the device, for example, adjusting the temperature in the vehicle to 22°C, setting the color of the light to warm yellow, etc., through the mobile application terminal.

According to some embodiments, regarding the manners for obtaining the driving environment parameter setting information, in addition to being received through the mobile application terminal and/or the vehicle-mounted device, the driving environment parameter setting information of the vehicle may also be acquired by the vehicle-mounted device.

The two manners can be used in combination or separately. Some of the driving environment parameters can be set on the mobile application terminal, and then some of the driving environment parameters in the vehicle are acquired through the vehicle-mounted device. For example, the light and the temperature are set through the mobile application terminal, and the seat state in the vehicle is acquired through the vehicle-mounted device; or all are acquired through the vehicle-mounted device. When setting is performed through the device, the driver may not be in the vehicle and does not know well about the environments inside and outside the vehicle. Therefore, the set information may be inaccurate. However, since what is acquired by the vehicle-mounted device is set information that is manually adjusted by the driver or automatically configured by the vehicle and fits the personality of the driver, the driver feels more comfortable during using the set information.

According to some embodiments, acquiring the driving environment parameter setting information includes:

acquiring the driving environment parameter setting information of the vehicle through the vehicle-mounted device; and

performing an update operation on the driving environment personalization information corresponding to the registered face feature based on the acquired driving environment parameter setting information.

As described in the foregoing embodiments, since when the setting is performed through the device (the mobile application terminal or the like), the driver may not be in the vehicle and does not know well about the environments inside and outside the vehicle. Therefore, the set information may be inaccurate. In another case, when the environments inside and outside the vehicle change in a vehicle driving process, the previously set information is no longer suitable for the current environment. For example, the external environment becomes dark due to time changes during driving. In order to facilitate driving, the light information needs to be changed in this case. When the driving environment parameters need to be adjusted in the driving process, the driver can directly set the driving environment parameters in the vehicle after passing face feature authentication, after setting, the driving environment parameter setting information is acquired through the vehicle-mounted device, and based on the driving environment parameter setting information, an update operation is performed on the driving environment personalization information corresponding to the registered face feature, so that the set driving environment personalization information is more suitable for the driver's requirements.

According to some embodiments, the method in the embodiments of the present disclosure further includes: performing at least one of the following operations on the stored driving environment personalization information according to a received management instruction: deletion, editing, permission setting, or the like.

In the embodiments of the present disclosure, a management person having permission can perform an operation on the driving environment personalization information through a management instruction. For example, a vehicle owner deletes a registered face feature and driving environment personalization information of a certain driver in the vehicle, or the vehicle owner restricts the permission of a certain driver to only adjust the seat state, etc. Through the operation on the driving environment personalization information, personalized permission management is implemented.

In one or more optional embodiments, the correspondence between the registered face feature and the driving environment personalization information is stored in at least one of the following locations: the mobile application terminal, a server, the vehicle-mounted device, or the like.

In the present embodiments, the registered face feature information and relationship may be stored in a location such as the mobile application terminal, the server, or the vehicle-mounted device. If the registered face feature information and relationship are stored in the mobile application terminal, the on-board unit and the mobile application terminal communicate with each other. After acquiring the driver's image, the on-board unit can download the corresponding information from the mobile application terminal for authentication, or transmit the face feature to the mobile application terminal for authentication. After the authentication is completed, the mobile application terminal sends the driving environment personalization information to the on-board unit. If the registered face feature information and relationship are stored in the vehicle-mounted device, the on-board unit does not need to communicate with the outside world, and directly performs authentication on the face feature of the driver obtained by the vehicle-mounted camera and the registered face feature stored in the vehicle-mounted device. If the registered face feature information and relationship are stored in the server, the server and the vehicle-mounted device need to communicate with each other. After acquiring the driver's image, the on-board unit can download the corresponding information from the server for authentication, or upload the face feature to the server for authentication. After the authentication is completed, the server sends the driving environment personalization information to the on-board unit.

According to some embodiments, sending the driving environment personalization information to the vehicle provided with the vehicle-mounted camera in operation 140 in the foregoing embodiments includes:
sending the driving environment personalization information to the vehicle provided with the vehicle-mounted camera through the server or the mobile application terminal communicating with the vehicle.

In the embodiments of the present disclosure, the server or the mobile application terminal is taken as an authentication subject, and the face feature authentication is implemented in the server or the mobile application terminal. After the authentication is completed, the driving environment personalization information stored in the server or the mobile application terminal is sent to the on-board unit. How to perform the setting based on the driving environment personalization information is not controlled by the server or the mobile application terminal. The server or the mobile application terminal only sends the driving environment personalization information to the on-board unit.

According to some embodiments, adjusting the driving environment of the vehicle provided with the vehicle-mounted camera according to the driving environment personalization information in operation 140 in the foregoing embodiments includes:
adjusting the driving environment of the vehicle provided with the vehicle-mounted camera through the vehicle-mounted device according to the driving environment personalization information.

In the embodiments of the present disclosure, the on-board unit is taken as the authentication subject, and the face feature authentication is completed in the vehicle-mounted device. In this case, there are two possibilities: the registered face feature and the driving environment personalization information are stored in the on-board unit, or the registered face feature and the driving environment personalization information are stored on the mobile application terminal or the server. If the driving environment personalization information is stored in the on-board unit, the vehicle-mounted device directly invokes the driving environment personalization information to perform corresponding setting on the vehicle, while if the driving environment personalization information is stored in the mobile application terminal or the server, the driving environment personalization information corresponding to the registered face feature needs to be downloaded from the mobile application terminal or the server, and the corresponding setting is performed on the vehicle based on the driving environment personalization information.

FIG. 4 is a schematic flowchart of setting of driving environment parameters in other embodiments of a method for intelligent adjustment of a driving environment provided in the embodiments of the present disclosure. The driving environment parameter setting information in the present embodiments includes seat state information. Acquiring the driving environment parameter setting information, as shown in FIG. 4, includes the following operations.

At operation 410, detection is performed on the driver's image to obtain a detection result.

An image of a driver entering a vehicle is acquired, and detection is implemented based on the acquired image of the driver. The detection can be implemented based on a neural network or other manners. The specific manner of performing detection on the driver's image is not limited in the embodiments of the present disclosure.

At operation 420, driver's body shape-related information and/or face height information is determined according to the detection result.

According to some embodiments, the determination of the driver's body shape-related information and the determination of the driver's face height information generally correspond to different detection results. That is, the detection on the driver can be performed based on one or two neural networks, respectively, to obtain detection results corresponding to the body shape-related information and/or the face height information. The body shape-related information may include, but may be not limited to, information, such as race and gender, that affects information related to riding of the driver (such as the degree of fatness or thinness, leg length information, skeleton size information, and hand length information). For example, face reference point detection is performed based on a key point detection network, and the face height information is determined based on an obtained face reference point. Attribute detection is performed on the driver's image based on a neural network for attribute detection to determine the body shape-related information, or the driver's body shape-related information can be determined based on a body or face detection result, or direct detection is performed via a classification neural network to obtain the body shape-related information. For example, the driver's skeleton size information can be obtained based on the gender obtained by face recognition. A female has a smaller skeleton, while a male has a larger skeleton.

Determining the body shape-related information and/or the face height information according to the detection result may be directly taking the detection result as the body shape-related information and/or the face height information, and may also be processing the detection result to obtain the body shape-related information and/or the face height information.

At operation 430, driver's seat state information is determined based on the body shape-related information and/or the face height information.

According to some embodiments, the comfortable sitting posture of the body is related not only to the sitting height, but also to the body shape. In order to provide a more comfortable seat adjustment position, in the embodiments of the present disclosure, the driver's body shape-related information and/or the face height information is obtained to determine seat adjustment information. In the embodiments of the present disclosure, the seat adjusted according to the seat adjustment information provides the driver with a more suitable sitting posture so as to improve the use comfort of the driver.

According to some embodiments, the detection result includes coordinates of a face reference point.

Operation 410 includes: performing face reference point detection on the driver's image to obtain coordinates of the face reference point of the driver in a camera coordinate system.

According to some embodiments, the face reference point may be any point on the face, may be a key point on the face, or may be another position point on the face. A driver's view plays an important role in a vehicle driving process. For the driver, ensuring the binocular height of the driver in the driving process can improve driving safety. Therefore, the face reference point can be set as a point related to the eyes, for example, at least one key point for determining the positions of both eyes, or a position point of a place between eyebrows. The number and positions of specific face reference points are not limited in the embodiments of the present disclosure, and depend on the face height that can be determined.

In some optional examples, the face reference point includes at least one face key point and/or at least one other face position point. Operation 410 includes: performing the face reference point detection on the driver's image to obtain coordinates of the at least one face key point of the driver in the camera coordinate system; and/or determining the at least one other face position point based on the coordinates of the at least one face key point.

According to some embodiments, the positions of face key points can be determined via a neural network, for example, one or more of 21 face key points, 106 face key points, or 240 face key points. The numbers of key points obtained via different networks are different. The key points may include key points of the five sense organs or may include key points of a face contour. Different densities of the key points result in different numbers of obtained key points. When one or more of the obtained key points are taken as face reference points, it is only required to select different parts according to specific situations. The positions and number of the face key points are not limited in the embodiments of the present disclosure.

According to some embodiments, the reference points may also be other face position points on the face image determined based on a face key point detection result. These other face position points may not be key points, i.e., any position points on the face. However, the positions can be determined according to the face key points. For example, the position of the place between eyebrows can be determined based on the key points of both eyes and the key points of the eyebrows.

Operation 420 includes: converting the coordinates of the face reference point from the camera coordinate system to an on-board unit coordinate system; and determining the driver's face height information based on the coordinates of the face reference point in the on-board unit coordinate system.

According to some embodiments, the face reference point is obtained through an image captured by a camera, and the face reference point corresponds to the camera coordinate system, while it is required to determine seat information in the on-board unit coordinate system. Therefore, it is required to convert the face reference point from the camera coordinate system to the on-board coordinate system.

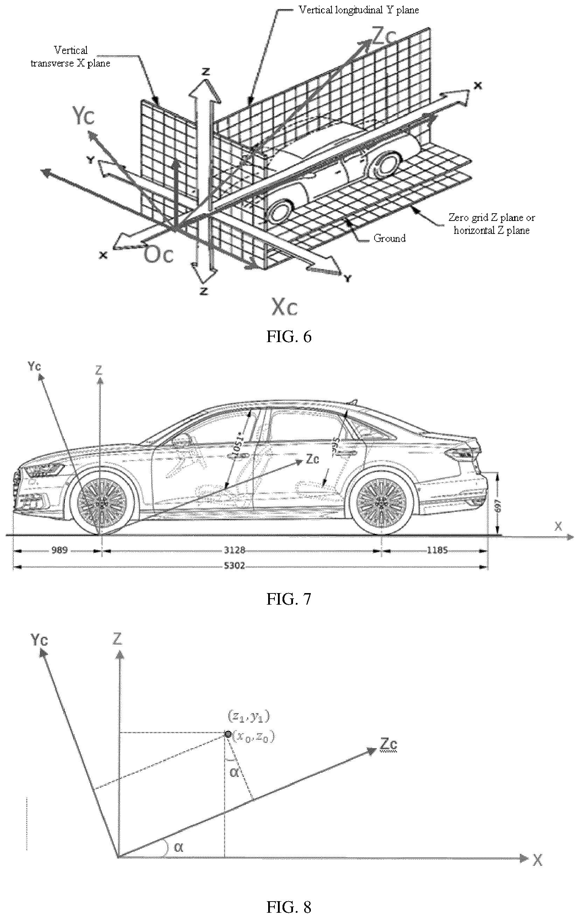

In an optional example, the coordinate system transformation mode commonly used in the prior art may be used to convert the coordinates of the position of the place between eyebrows from the camera coordinate system to the on-board coordinate system. For example, FIG. 5 is a reference diagram of positions of an on-board unit coordinate system and a camera coordinate system, where in the on-board coordinate system, the y-axis is a vehicle front wheel axle, the x-axis is parallel to an upper left edge, and the z-axis is downward perpendicular to the ground. FIG. 6 is a schematic result diagram of translating spatial points of a camera coordinate system to an on-board unit coordinate system. As shown in FIG. 6, a camera coordinate system origin Oc is translated to an on-board unit coordinate system origin O. It is known that Oc is (Xwc, Ywc, Zwc) in the on-board coordinate system, Oc is (0, 0, 0) in the camera coordinate system, and it is translated to the on-board coordinate system origin O(0, 0, 0) as follows:

$$0 = 0 - Xwc \qquad\qquad \text{Formula (1)}$$

$$0 = 0 - \mathrm{Ywc} \qquad\qquad \text{Formula (2)}$$

$$0 = 0 - \mathrm{Zwc} \qquad\qquad \text{Formula (3)}$$

Based on formulas (1), (2), and (3), the following translation vector T is obtained:

$$[\mathrm{Xwc} \quad \mathrm{Ywc} \quad \mathrm{Zwc}] \qquad\qquad \text{Formula (4)}$$

Translation of the coordinate system is completed.

FIG. 7 is a schematic diagram of simplifying a camera coordinate system and an on-board unit coordinate system during seat adjustment. As shown in FIG. 7, in an actual seat adjustment process, the X-axis in the on-board unit coordinate system is not adjusted, and then the conversion of the coordinate points in the camera coordinate system to the on-board unit coordinate system is simplified as a rotation operation in a two-dimensional coordinate system. FIG. 8 is a schematic diagram of rotating coordinate points $(x_1, z_1)$ in a camera coordinate system to coordinate points $(x_0, z_0)$ in an on-board unit coordinate system. As shown in FIG. 8, assuming that a it is detected in the camera coordinate system that the coordinate point of the driver's head is $(y_1, z_1)$, the coordinate point is rotated by an angle $\alpha$, i.e., the installation angle of a camera, to obtain a coordinate point $(x_0, z_0)$ in the on-board unit coordinate system.

The conversion process provided according to the conversion schematic diagram of the coordinate point in the two coordinate systems shown in FIG. 7 is as follows:

$$x_0 = -y_1 sin\alpha + z_1 cos\alpha \qquad\qquad \text{Formula (5)}$$

$$z_0 = y_1 cos\alpha + z_1 sin\alpha \qquad\qquad \text{Formula (6)}$$

$$y_0 = -x_1 \qquad\qquad \text{Formula (7)}$$

Based on formulas (5), (6), and (7), the following formula can be obtained:

$$\begin{bmatrix} x_0 \\ y_0 \\ z_0 \end{bmatrix} = \begin{bmatrix} 0 & -sin\alpha & cos\alpha \\ 1 & 0 & 0 \\ 0 & cos\alpha & sin\alpha \end{bmatrix} * \begin{bmatrix} x_1 \\ y_1 \\ z_1 \end{bmatrix} = R_Y * \begin{bmatrix} x_1 \\ y_1 \\ z_1 \end{bmatrix} \qquad\qquad \text{Formula (8)}$$

Based on formulas (4) and (8), it can obtained that the final coordinates of the coordinate point, in the camera coordinate system, rotated and translated to the on-board unit coordinate system are:

$$\begin{bmatrix} x_0 \\ y_0 \\ z_0 \end{bmatrix} = R_Y * \begin{bmatrix} x_1 \\ y_1 \\ z_1 \end{bmatrix} + T \qquad\qquad \text{Formula (9).}$$

Through coordinate system conversion, the driver's face height information in the vehicle can be determined. That is, the relative position relationship between the face height and the seat can be determined, and desired seat state information corresponding to the face height information can be obtained.

According to some embodiments, the body shape-related information includes race information and/or gender information.

Operation 410 includes: inputting the driver's image to a neural network for attribute detection to perform attribute detection so as to obtain an attribute detection result output by the neural network.

According to some embodiments, in the embodiments of the present disclosure, the attribute detection is implemented via the neural network, and the attribute detection result includes driver's race information and/or gender information. According to some embodiments, the neural network may be a classification network including at least one branch. In the case where one branch is included, the race information or the gender information is classified. In the case where two branches are included, the race information and the gender information are classified. Thus, race classification and gender classification of the driver are determined.

Operation 420 includes: obtaining driver's race information and/or gender information corresponding to the image based on the attribute detection result.

According to some embodiments, there is a large difference between the body shapes of different genders. Due to a large body shape difference between a male and a female with the same upper body height, corresponding comfortable seat positions are also different greatly. Therefore, in order to provide a more comfortable seat position, it is required to obtain driver's gender information. In addition to gender, there is also a large difference between the body shapes of different races (such as yellow, white, or black). For example, black people are usually stronger and need more space in the front and back positions of the seat. For different races, seat position reference data suitable for the body shape of each race can be obtained through big data calculation.

According to some embodiments, operation 430 includes:

> obtaining a preset seat adjustment conversion relationship related to a body shape and/or a face height; and
> determining a desired seat state corresponding to the driver based on the body shape-related information and/or the face height information and based on the seat adjustment conversion relationship, and taking the desired seat state as the driver's seat state information.

According to some embodiments, the seat adjustment conversion relationship may include, but may be not limited to, a conversion formula or a corresponding relationship table, etc. In the conversion formula, the body shape and/or the face height may be input into the formula to obtain data corresponding to the desired seat state. In the corresponding relationship table, the data corresponding to the desired seat state may be obtained directly based on a body shape and/or face height lookup table. The corresponding relationship table may be obtained through big data statistics or other manners. The specific manner for obtaining the corresponding relationship table is not limited in the embodiments of the present disclosure.

In an optional example, for determination of a seat state, due to different races and/or genders, desired seat states are also different. For different genders and races, multiple groups of corresponding formulas, for example, yellow people + male, may be obtained by combination. For a seat adjustment formula, specific to the coordinates (x, y, z) of the place between eyebrows and a backrest adjustment angle input in each formula, each dimension corresponds to a cubic unary function, for example,

$$x_{out} = a_1 x^3 + b_1 x^2 + c_1 x + d_1 \qquad \text{Formula (10)}$$

$$y_{out} = a_2 y^3 + b_2 y^2 + c_2 y + d_2 \qquad \text{Formula (11)}$$

$$z_{out} = a_3 z^3 + b_3 z^2 + c_3 z + d_3 \qquad \text{Formula (12)}$$

$$angle_{out} = a_4 x^3 + b_4 x^2 + c_4 x + d_4 \qquad \text{Formula (13)}$$

Based on the above formulas (10), (11), (12), and (13), the final descried seat state ($x_{out}$, $Y_{out}$, $z_{out}$, $angle_{out}$) may be determined by calculation based on the coordinates of the place between eyebrows in x-axis, y-axis, and z-axis directions, and adjustment amounts of four motors are obtained through a final motor adjustment distribution formula, where $x_{out}$ represents seat front and back position information, $y_{out}$ represents cushion tilt angle information, $z_{out}$ represents seat upper and lower position information, $angle_{out}$ represents backrest tilt angle information, and $a_1, b_1, c_1, d_1, a_2, b_2, c_2, d_2, a_3, b_3, c_3, d_3, a_4, b_4, c_4, d_4$ are constants obtained through multiple experiments.

In another optional example, the final desired seat state ($x_{out}$, $y_{out}$, $z_{out}$, $angle_{out}$) may also be determined by calculation based on the coordinates of the place between eyebrows in the z-axis direction (i.e., the height of the place between eyebrows), and this may be implemented based on the following formulas:

$$x_{out} = a_5 z + d_5 \qquad \text{Formula (14)}$$

$$y_{out} = a_6 z + d_6 \qquad \text{Formula (15)}$$

$$z_{out} = a_7 z + d_7 \qquad \text{Formula (16)}$$

$$angle_{out} = a_8 z + d_8 \qquad \text{Formula (17)}$$

where $x_{out}$ represents the seat front and back position information, $y_{out}$ represents the seat tilt angle information, $z_{out}$ represents the seat lower and lower position information, $angle_{out}$ represents the backrest tilt angle information, and $a_5$, $d_5, a_6, d_6, a_7, d_7, a_8, d_8$ are constants obtained through multiple experiments.

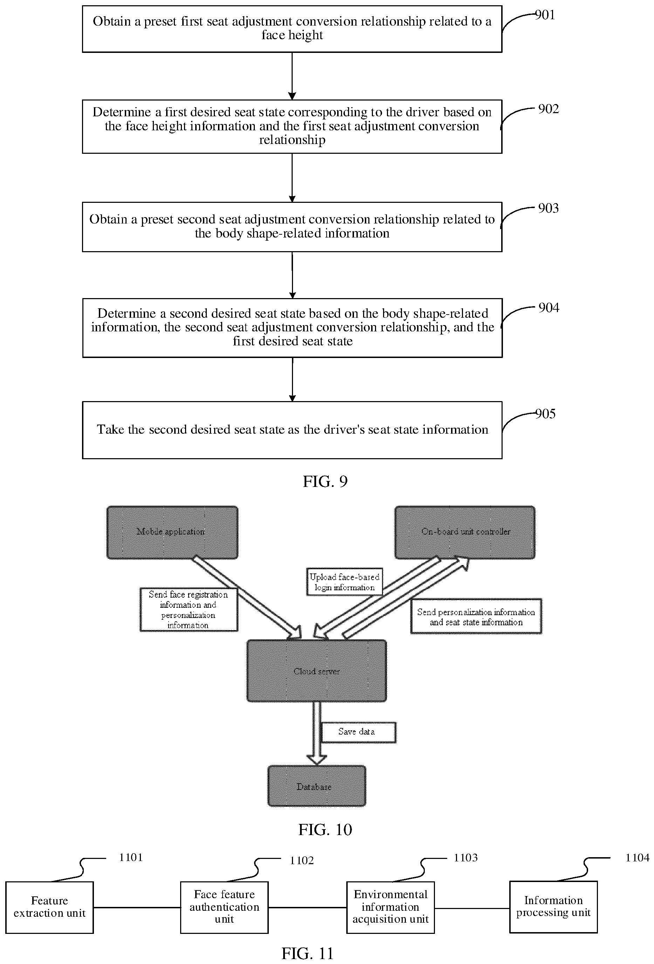

FIG. 9 is part of a schematic flowchart of an optional example of intelligent adjustment of a driving environment provided in the embodiments of the present disclosure. As shown in FIG. 9, in the foregoing embodiments, operation 430 includes the following operations.

At operation 901, a preset first seat adjustment conversion relationship related to a face height is obtained.

According to some embodiments, the seat adjustment conversion relationship may include, but may be not limited to, a conversion formula or a corresponding relationship table, etc. In the conversion formula, the face height may be input into the formula to obtain data corresponding to the desired seat state. In the corresponding relationship table, the data corresponding to the desired seat state may be obtained directly based on a face height lookup table. The corresponding relationship table may be obtained through big data statistics or other manners. The specific manner for obtaining the corresponding relationship table is not limited in the embodiments of the present disclosure.

At operation 902, a first desired seat state corresponding to the driver is determined based on the face height information and the first seat adjustment conversion relationship.

At operation 903, a preset second seat adjustment conversion relationship related to the body shape-related information is obtained.

According to some embodiments, in the present embodiments, the body shape-related information corresponds to the second seat adjustment conversion relationship. The second seat adjustment conversion relationship is different from the first seat adjustment conversion relationship, and its form may include, but may not be limited to, a conversion formula or a corresponding relationship table, etc. A second desired seat state can be determined through the second seat adjustment conversion relationship in combination with the body shape-related information and the first desired seat state.

At operation 904, a second desired seat state is determined based on the body shape-related information, the second seat adjustment conversion relationship and the first desired seat state.

At operation 905, the second desired seat state is taken as the driver's seat state information.

In the present embodiments, the seat state information is determined by combining the body shape-related information and the face height information, where the number of classifications obtained by combining races and genders in the body shape-related information is limited, and as long as a combination, for example, male + yellow people, is determined, it is applicable to all drivers in this class. Personalization is insufficient, but the information is easy to obtain. However, the face height information is more personalized, and the adjustment information corresponding to different drivers may be different. Therefore, in the present embodiments, the accuracy of the seat state information is improved by combining general information and personalized information.

According to some embodiments, the seat state information includes, but is not limited to, at least one of the following information: seat adjustment parameter target values, seat upper and lower position information, seat front and back position information, seat left and right position information, backrest tilt angle position information, or cushion tilt angle position information.

According to some embodiments, in order to implement multi-directional adjustment of a seat, the seat needs to be adjusted in multiple directions. In addition to usual up-down, front-back and left-right adjustment amounts, the backrest tilt angle information and the cushion tilt angle information are also included. For example, the target values of various adjustment parameters such as up, down, left, right, front, back, etc., which would be reached ultimately by adjusting the seat are output directly, and how to reach the target values by adjustment can be implemented by processing by a motor or another device.

FIG. 10 is a system schematic diagram of another optional example of a method for intelligent adjustment of a driving environment provided in the embodiments of the present disclosure. FIG. 10 is a schematic diagram of a software system. The system is divided into three parts: a mobile application, a cloud server, and an on-board unit controller. Data among the three parts is transmitted via a network. The mobile application is installed on a mobile device such as a mobile phone or a tablet, can perform face registration and setting of driving environment personalization information of a driver, and transmits the data to the cloud server. The on-board unit controller is installed on a vehicle, can perform adjustment and control of the light color, temperature, music playback and seat in the vehicle, and uploads face information required by a driver for login to the cloud server by using a camera. The cloud server accesses the data in the system by using a database. A specific implementation scheme can be adjusted according to actual application scenarios.

A person of ordinary skill in the art may understand that all or some of operations for implementing the foregoing method embodiments are achieved by a program by instructing related hardware; the foregoing program can be stored in a computer-readable storage medium; when the program is executed, operations included in the foregoing method embodiments are executed. Moreover, the foregoing storage medium includes various media capable of storing a program code such as an ROM, an RAM, a magnetic disk, or an optical disk.

FIG. 11 is one schematic structural diagram of an apparatus for intelligent adjustment of a driving environment provided in the embodiments of the present disclosure. The apparatus according to the embodiments may be configured to implement the foregoing method embodiments for intelligent adjustment of a driving environment of the present disclosure. As shown in FIG. 11, the apparatus according to the embodiments includes:

a feature extraction unit 1101, configured to extract a face feature of a driver's image captured by a vehicle-mounted camera;

a face feature authentication unit 1102, configured to authenticate the extracted face feature based on at least one pre-stored registered face feature;

an environmental information acquisition unit 1103, configured to, in response to successful face feature authentication, determine driving environment personalization information corresponding to the registered face feature corresponding to the face feature according to a correspondence between the pre-stored registered face feature and the driving environment personalization information; and

an information processing unit 1104, configured to send the driving environment personalization information to a vehicle provided with the vehicle-mounted camera, or control the vehicle to adjust the driving environment according to the driving environment personalization information.

Based on the apparatus for intelligent adjustment of a driving environment provided by the foregoing embodiments of the present disclosure, by taking a face feature as a registration and/or authentication means of personalized intelligent configuration of a driving environment, the present disclosure improves the accuracy of authentication and the safety of a vehicle, implements intelligent personalized configuration based on comparison of face features, helps protect driver's privacy, and also improves driving comfort, intelligence and user experience.

According to some embodiments, the driving environment personalization information includes at least one of the following: temperature information, light information, music style information, seat state information, or loudspeaker setting information.

In one or more optional embodiments, the apparatus according to the embodiments of the present disclosure further includes:

a prompt information unit, configured to, in response to a face feature authentication failure, provide registration application prompt information or authentication failure prompt information.

In one or more optional embodiments, the apparatus according to the embodiments of the present disclosure further includes: a driver registration unit, configured to acquire, through a driver registration process, a registered face feature and driving environment personalization information of a driver, and a correspondence therebetween.

According to some embodiments, the driver registration unit includes:

an image acquisition module, configured to acquire a driver's image;

a face feature extraction module, configured to extract a face feature of the image;

a parameter information acquisition module, configured to acquire driving environment parameter setting information; and

a registration information storage module, configured to store the extracted face feature as the registered face feature, store the driving environment parameter setting information as the driving environment personalization information of the registered face feature, and establish and store the correspondence between the registered face feature and the driving environment personalization information.

According to some embodiments, the image acquisition module is configured to acquire the driver's image through a mobile application terminal and/or a vehicle-mounted camera.

According to some embodiments, the image acquisition module is configured to acquire the driver's image from at least one image stored in the mobile application terminal, or capture the driver's image through a camera apparatus provided on the mobile application terminal.

According to some embodiments, the parameter information acquisition module is configured to receive the driving environment parameter setting information through the mobile application terminal and/or the vehicle-mounted device.

According to some embodiments, the parameter information acquisition module is configured to acquire the driving environment parameter setting information of the vehicle through the vehicle-mounted device.

According to some embodiments, the parameter information acquisition module is configured to acquire the driving environment parameter setting information of the vehicle through the vehicle-mounted device; and perform an update operation on the driving environment personalization information corresponding to the registered face feature based on the acquired driving environment parameter setting information.

According to some embodiments, the driver registration unit further includes:
an information management module, configured to perform at least one of the following operations on the stored driving environment personalization information according to a received management instruction: deletion, editing, permission setting, or the like.

According to some embodiments, the correspondence between the registered face feature and the driving environment personalization information is stored in at least one of the following locations: the mobile application terminal, a server, the vehicle-mounted device, or the like.

According to some embodiments, when sending the driving environment personalization information to the vehicle provided with the vehicle-mounted camera, the information processing unit is configured to send the driving environment personalization information to the vehicle provided with the vehicle-mounted camera through the server or the mobile application terminal communicating with the vehicle.

According to some embodiments, when controlling the vehicle to adjust the driving environment according to the driving environment personalization information, the information processing unit is configured to adjust the driving environment of the vehicle provided with the vehicle-mounted camera through the vehicle-mounted device according to the driving environment personalization information.

In one or more optional embodiments, the driving environment parameter setting information includes seat state information.

The parameter information acquisition module is configured to perform detection on the driver's image to obtain a detection result; determine driver's body shape-related information and/or face height information according to the detection result; and determine driver's seat state information based on the body shape-related information and/or the face height information.

According to some embodiments, the detection result includes coordinates of a face reference point.

When performing the detection on the driver's image to obtain the detection result, the parameter information acquisition module is configured to perform face reference point detection on the driver's image to obtain coordinates of the face reference point of the driver in a camera coordinate system.

When determining the driver's face height information according to the detection result, the parameter information acquisition module is configured to convert the coordinates of the face reference point from the camera coordinate system to an on-board unit coordinate system; and determine the driver's face height information based on the coordinates of the face reference point in the on-board unit coordinate system.

According to some embodiments, the face reference point includes at least one face key point and/or at least one other face position point.

When performing the face reference point detection on the driver's image to obtain the coordinates of the face reference point of the driver in the camera coordinate system, the parameter information acquisition module is configured to perform the face reference point detection on the driver's image to obtain coordinates of the at least one face key point of the driver in the camera coordinate system; and/or determine the at least one other face position point based on the coordinates of the at least one face key point.

According to some embodiments, the body shape-related information includes race information and/or gender information.

When performing the detection on the driver's image to obtain the detection result, the parameter information acquisition module is configured to input the driver's image to a neural network for attribute detection to perform attribute detection so as to obtain an attribute detection result output by the neural network.

When determining the driver's body shape-related information according to the detection result, the parameter information acquisition module is configured to obtain driver's race information and/or gender information corresponding to the image based on the attribute detection result.

According to some embodiments, when determining the driver's seat state information based on the body shape-related information and/or the face height information, the parameter information acquisition module is configured to obtain a preset seat adjustment conversion relationship related to a body shape and/or a face height; and determine a desired seat state corresponding to the driver based on the body shape-related information and/or the face height information and based on the seat adjustment conversion relationship, and take the desired seat state as the driver's seat state information.

According to some embodiments, when determining the driver's seat state information based on the body shape-related information and/or the face height information, the parameter information acquisition module is configured to obtain a preset first seat adjustment conversion relationship related to a face height; determine a first desired seat state corresponding to the driver based on the face height information and the first seat adjustment conversion relationship; obtain a preset second seat adjustment conversion relationship related to the body shape-related information; determine a second desired seat state based on the body shape-related information, the second seat adjustment conversion relationship and the first desired seat state; and take the second desired seat state as the driver's seat state information.

According to some embodiments, the seat state information includes at least one of the following information: seat adjustment parameter target values, seat upper and lower position information, seat front and back position information, seat left and right position information, backrest tilt angle position information, or cushion tilt angle position information.

For the working process, the setting mode, and corresponding technical effects of any embodiment of the apparatus for intelligent adjustment of a driving environment provided in the embodiments of the present disclosure, reference may be made to the specific descriptions of the foregoing corresponding method embodiments of the present disclosure, and details are not described herein repeatedly due to space limitation.

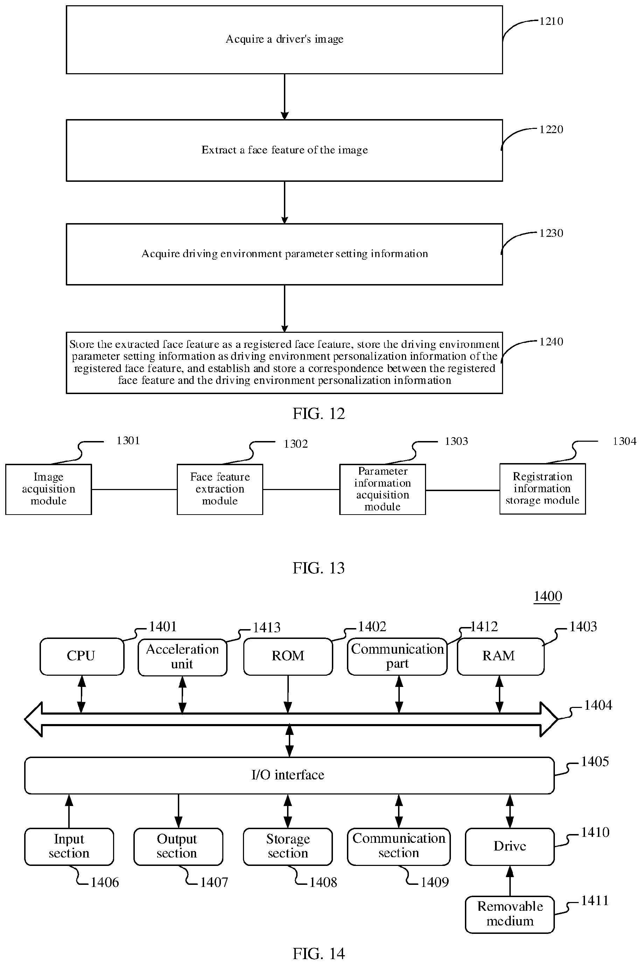

FIG. 12 is one schematic flowchart of a method for driver registration provided in embodiments of the present disclosure. The method may be executed by any electronic device, such as a terminal device, a server, a mobile device, or a vehicle-mounted device. As shown in FIG. 12, the method according to the embodiments includes the following operations.

At operation 1210, a driver's image is acquired.

According to some embodiments, the image of a driver requesting for registration may be acquired through a mobile application terminal or an on-board unit. Both the mobile application terminal and the on-board unit are provided with a camera apparatus such as a camera. The driver's image is captured through the camera.

In an optional example, operation 1210 may be performed by a processor by invoking a corresponding instruction stored in a memory, or may be performed by an image acquisition module 1301 run by the processor.

At operation 1220, a face feature of the image is extracted.

According to some embodiments, feature extraction may be performed on the image via a convolutional neural network to obtain a face feature, and the face feature of the image may also be obtained based on other means. The specific means for obtaining the face feature is not limited in the embodiments of the present disclosure.

In an optional example, operation 1220 may be performed by a processor by invoking a corresponding instruction stored in a memory, or may be performed by a face feature extraction module 1302 run by the processor.

At operation 1230, driving environment parameter setting information is acquired.

According to some embodiments, the image of a driver requesting for registration may be acquired through a mobile application terminal or an on-board unit. Both the mobile application terminal and the on-board unit are provided with a camera apparatus such as a camera. The driver's image is captured through the camera.

In an optional example, operation 1230 may be performed by a processor by invoking a corresponding instruction stored in a memory, or may be performed by a parameter information acquisition module 1303 run by the processor.

At operation 1240, the extracted face feature is stored as a registered face feature, the driving environment parameter setting information is stored as driving environment personalization information of the registered face feature, and the correspondence between the registered face feature and the driving environment personalization information is established and stored.

In an optional example, operation 1230 may be performed by a processor by invoking a corresponding instruction stored in a memory, or may be performed by a registration information storage module 1304 run by the processor.

In the embodiments of the present disclosure, in order to ensure that registered face features have one-to-one correspondence to the driving environment personalization formation, during storage, correspondences between the registered face features and the driving environment personalization formation are also saved. When subsequent acquisition of the driving environment personalization formation is required, corresponding driving environment personalization formation can be obtained through the correspondences simply by face feature matching rather than a complicated process. Intelligent personalized configuration is implemented based on face features, and the driving environment personalization information is acquired quickly while driver's privacy is protected.

According to some embodiments, the driving environment personalization information includes at least one of the following: temperature information, light information, music style information, seat state information, or loudspeaker setting information.

Based on the driving environment personalization information set in the embodiments of the present disclosure, a more comfortable driving environment can be provided for the driver, and is more in line with driver's personal habits. That is, different driving environments can be set for different drivers of the same vehicle, and this is more personalized, thereby improving driving comfort. According to some embodiments, one or more of information such as temperature information, light information, music style information, seat state information, or sound setting information in the vehicle can be set. In addition to the information listed above, persons skilled in the art should understand that other information that affects a driving environment is also the driving environment personalization information that can be set in the present disclosure.

In one or more optional embodiments, operation 1210 includes:
acquiring the driver's image through a mobile application terminal and/or a vehicle-mounted camera.

In the present embodiments, the driver's image may be acquired through the mobile application terminal and/or the vehicle-mounted camera. That is, when requesting for registration, the driver can select a convenient port by self for registration, can perform registration using the mobile application terminal (such as a mobile phone or a tablet computer), and can also perform registration through an on-board unit. During the registration through the on-board unit, the driver's image is captured through the vehicle-mounted camera. In this case, the vehicle-mounted camera can be set in front of the driver's seat, and the driving environment personalization information of the corresponding on-board unit can be acquired by the driver by inputting through an interaction device of the on-board unit or reading vehicle setting data through a vehicle-mounted device.

According to some embodiments, acquiring the driver's image through the mobile application terminal includes:

acquiring the driver's image from at least one image stored in the mobile application terminal, or
capturing the driver's image through a camera apparatus provided on the mobile application terminal.

In the present embodiments, the driver's image is acquired through the mobile application terminal. The mobile application terminal in the embodiments of the present disclosure includes, but is not limited to, a device having photographing and storage functions, such as a mobile phone or a tablet computer. Since the mobile application terminal has photographing and storage functions, the driver's image can be selected from images stored in the mobile application terminal, or captured through a camera on the mobile application terminal.

In one or more optional embodiments, operation 1230 includes:
receiving the driving environment parameter setting information through the mobile application terminal and/or the vehicle-mounted device.

In the embodiments of the present disclosure, after the registered face feature is acquired, it is also required to obtain corresponding driving environment parameter setting information. Driving environment parameters include, but are not limited to, driving environment-related parameters such as the temperature, light, music style, seat state, or loudspeaker settings in the vehicle. These environmental parameters can be set by the driver by inputting through the device, for example, adjusting the temperature in the vehicle to 22°C, setting the color of the light to warm yellow, etc., through the mobile application terminal.

According to some embodiments, regarding the manners for obtaining the driving environment parameter setting information, in addition to being received through the mobile application terminal and/or the vehicle-mounted device, the driving environment parameter setting information of the vehicle may also be acquired by the vehicle-mounted device.

The two manners can be used in combination or separately. Some of the driving environment parameters can be set on the mobile application terminal, and then some of the driving environment parameters in the vehicle are acquired through the vehicle-mounted device. For example, the light and the temperature are set through the mobile application terminal, and the seat state in the vehicle is acquired through the vehicle-mounted device; or all are acquired through the vehicle-mounted device. When setting is performed through the device, the driver may not be in the vehicle and does not know well about the environments inside and outside the vehicle. Therefore, the set information may be inaccurate. However, since what is acquired by the vehicle-mounted device is set information that is manually adjusted by the driver or automatically configured by the vehicle and fits the personality of the driver, the driver feels more comfortable during using the set information.

According to some embodiments, operation 1230 includes:
acquiring the driving environment parameter setting information of the vehicle through the vehicle-mounted device; and

performing an update operation on the driving environment personalization information corresponding to the registered face feature based on the acquired driving environment parameter setting information.

As described in the foregoing embodiments, since when the setting is performed through the device (the mobile application terminal or the like), the driver may not be in the vehicle and does not know well about the environments inside and outside the vehicle. Therefore, the set information may be inaccurate. In another case, when the environments inside and outside the vehicle change in a vehicle driving process, the previously set information is no longer suitable for the current environment. For example, the external environment becomes dark due to time changes during driving. In order to facilitate driving, the light information needs to be changed in this case. When the driving environment parameters need to be adjusted in the driving process, the driver can directly set the driving environment parameters in the vehicle after passing face feature authentication, after setting, the driving environment parameter setting information is acquired through the vehicle-mounted device, and based on the driving environment parameter setting information, an update operation is performed on the driving environment personalization information corresponding to the registered face feature, so that the set driving environment personalization information is more suitable for the driver's requirements

In one or more optional embodiments, the method according to the embodiments of the present disclosure further includes:

performing at least one of the following operations on the stored driving environment personalization information according to a received management instruction: deletion, editing, permission setting, or the like.

In the embodiments of the present disclosure, a management person having permission can perform an operation on the driving environment personalization information through a management instruction. For example, a vehicle owner deletes a registered face feature and driving environment personalization information of a certain driver in the vehicle, or the vehicle owner restricts the permission of a certain driver to only adjust the seat state, etc. Through the operation on the driving environment personalization information, personalized permission management is implemented.

In one or more optional embodiments, the correspondence between the registered face feature and the driving environment personalization information is stored in at least one of the following locations: the mobile application terminal, a server, the vehicle-mounted device, or the like.

In the present embodiments, the registered face feature information and relationship may be stored in a location such as the mobile application terminal, the server, or the vehicle-mounted device. If the registered face feature information and relationship are stored in the mobile application terminal, the on-board unit and the mobile application terminal communicate with each other. After acquiring the driver's image, the on-board unit can download the corresponding information from the mobile application terminal for authentication, or transmit the face feature to the mobile application terminal for authentication. After the authentication is completed, the mobile application terminal sends the driving environment personalization information to the on-board unit. If the registered face feature information and relationship are stored in the vehicle-mounted device, the on-board unit does not need to communicate with the outside world, and directly performs authentication on the face feature of the driver obtained by the vehicle-mounted camera and the registered face feature stored in the vehicle-mounted device. If the registered face feature information and relationship are stored in the server, the server and the vehicle-mounted device need to communicate with each other. After acquiring the driver's image, the on-board unit can download the corresponding information from the server for authentication, or upload the face feature to the server for authentication. After the authentication is completed, the server sends the driving environment personalization information to the on-board unit.

In one or more optional embodiments, the driving environment parameter setting information includes seat state information.

Operation 1230 includes:

performing detection on the driver's image to obtain a detection result;
determining driver's body shape-related information and/or face height information according to the detection result; and
determining driver's seat state information based on the body shape-related information and/or the face height information.

The solution in the embodiments is the same as the solution in other embodiments of the foregoing method for intelligent adjustment of a driving environment shown in FIG. 4. It can be considered that the descriptions in the foregoing embodiments in FIG. 4 are all applicable to the present embodiments, and the solution may be understood with reference to the foregoing embodiments. Details are not described herein repeatedly.

According to some embodiments, the detection result includes coordinates of a face reference point.

Performing the detection on the driver's image to obtain the detection result includes: performing face reference point detection on the driver's image to obtain coordinates of the face reference point of the driver in a camera coordinate system.

Determining the driver's face height information according to the detection result includes: converting the coordinates of the face reference point from the camera coordinate system to an on-board unit coordinate system; and determining the driver's face height information based on the coordinates of the face reference point in the on-board unit coordinate system.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

According to some embodiments, the face reference point includes at least one face key point and/or at least one other face position point.

Performing the face reference point detection on the driver's image to obtain the coordinates of the face reference point of the driver in the camera coordinate system includes:

performing the face reference point detection on the driver's image to obtain coordinates of the at least one face key point of the driver in the camera coordinate system;

and/or determining the at least one other face position point based on the coordinates of the at least one face key point.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

According to some embodiments, the body shape-related information includes race information and/or gender information.

Performing the detection on the driver's image to obtain the detection result includes:

inputting the driver's image to a neural network for attribute detection to perform attribute detection so as to obtain an attribute detection result output by the neural network.

Determining the driver's body shape-related information according to the detection result includes:

obtaining driver's race information and/or gender information corresponding to the image based on the attribute detection result.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

According to some embodiments, determining the driver's seat state information based on the body shape-related information and/or the face height information includes:

obtaining a preset seat adjustment conversion relationship related to a body shape and/or a face height; and determining a desired seat state corresponding to the driver based on the body shape-related information and/or the face height information and based on the seat adjustment conversion relationship, and taking the desired seat state as the driver's seat state information.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

According to some embodiments, determining the driver's seat state information based on the body shape-related information and the face height information includes:

obtaining a preset first seat adjustment conversion relationship related to a face height;
determining a first desired seat state corresponding to the driver based on the face height information and the first seat adjustment conversion relationship;
obtaining a preset second seat adjustment conversion relationship related to the body shape-related information;
determining a second desired seat state based on the body shape-related information, the second seat adjustment conversion relationship and the first desired seat state; and
taking the second desired seat state as the driver's seat state information.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

According to some embodiments, the seat state information includes at least one of the following information: seat adjustment parameter target values, seat upper and lower position information, seat front and back position information, seat left and right position information, backrest tilt angle position information, or cushion tilt angle position information.

The solution in the embodiments is the same as the solution in corresponding embodiments of the foregoing method for intelligent adjustment of a driving environment. It can be considered that the descriptions in the corresponding embodiments of the foregoing method for intelligent adjustment of a driving environment are all applicable to the present embodiments, and the solution may be understood with reference to the foregoing embodiments. Details are not described herein repeatedly.

A person of ordinary skill in the art may understand that all or some of operations for implementing the foregoing method embodiments are achieved by a program by instructing related hardware; the foregoing program can be stored in a computer-readable storage medium; when the program is executed, operations included in the foregoing method embodiments are executed. Moreover, the foregoing storage medium includes various media capable of storing a program code such as an ROM, an RAM, a magnetic disk, or an optical disk.

FIG. 13 is one schematic structural diagram of an apparatus for driver registration provided in embodiments of the present disclosure. The apparatus according to the embodiments may be configured to implement the foregoing method embodiments for driver registration of the present disclosure. As shown in FIG. 13, the apparatus according to the embodiments includes:

an image acquisition module 1301, configured to acquire a driver's image;
a face feature extraction module 1302, configured to extract a face feature of the image;
a parameter information acquisition module 1303, configured to acquire driving environment parameter setting information; and
a registration information storage module 1304, configured to store the extracted face feature as the registered face feature, store the driving environment parameter setting information as the driving environment personalization information of the registered face feature, and establish and store the correspondence between the registered face feature and the driving environment personalization information.

In the embodiments of the present disclosure, in order to ensure that registered face features have one-to-one correspondence to the driving environment personalization formation, during storage, correspondences between the registered face features and the driving environment personalization formation are also saved. When subsequent acquisition of the driving environment personalization formation is required, corresponding driving environment personalization formation can be obtained through the correspondences simply by face feature matching rather than a complicated process. Intelligent personalized configuration is implemented based on face features, and the driving environment personalization information is acquired quickly while driver's privacy is protected.

According to some embodiments, the driving environment personalization information includes at least one of the following: temperature information, light information, music style information, seat state information, or loudspeaker setting information.

In one or more optional embodiments, the image acquisition module is configured to acquire the driver's image through a mobile application terminal and/or a vehicle-mounted camera.

According to some embodiments, the image acquisition module is configured to acquire the driver's image from at least one image stored in the mobile application terminal, or capture the driver's image through a camera apparatus provided on the mobile application terminal.

In one or more optional embodiments, the parameter information acquisition module 1303 is configured to receive the driving environment parameter setting information through the mobile application terminal and/or the vehicle-mounted device.

According to some embodiments, the parameter information acquisition module 1303 is configured to acquire the driving environment parameter setting information of the vehicle through the vehicle-mounted device.

According to some embodiments, the parameter information acquisition module 1303 is configured to acquire the driving environment parameter setting information of the vehicle through the vehicle-mounted device; and perform an update operation on the driving environment personalization information corresponding to the registered face feature based on the acquired driving environment parameter setting information.

In one or more optional embodiments, the apparatus according to the embodiments of the present disclosure further includes:

an information management module, configured to perform at least one of the following operations on the stored driving environment personalization information according to a received management instruction: deletion, editing, permission setting, or the like.

In one or more optional embodiments, the correspondence between the registered face feature and the driving environment personalization information is stored in at least one of the following locations: the mobile application terminal, a server, the vehicle-mounted device, or the like.

In one or more optional embodiments, the driving environment parameter setting information includes seat state information.

The parameter information acquisition module is configured to perform detection on the driver's image to obtain a detection result; determine driver's body shape-related information and/or face height information according to the detection result; and determine driver's seat state information based on the body shape-related information and/or the face height information.

In one or more optional embodiments, the detection result includes coordinates of a face reference point.

When performing the detection on the driver's image to obtain the detection result, the parameter information acquisition module is configured to perform face reference point detection on the driver's image to obtain coordinates of the face reference point of the driver in a camera coordinate system.

When determining the driver's face height information according to the detection result, the parameter information acquisition module is configured to convert the coordinates of the face reference point from the camera coordinate system to an on-board unit coordinate system; and

determine the driver's face height information based on the coordinates of the face reference point in the on-board unit coordinate system.

According to some embodiments, the face reference point includes at least one face key point and/or at least one other face position point.

When performing the face reference point detection on the driver's image to obtain the coordinates of the face reference point of the driver in the camera coordinate system, the parameter information acquisition module is configured to perform the face reference point detection on the driver's image to obtain coordinates of the at least one face key point of the driver in the camera coordinate system; and/or determine the at least one other face position point based on the coordinates of the at least one face key point.

According to some embodiments, the body shape-related information includes race information and/or gender information.

When performing the detection on the driver's image to obtain the detection result, the parameter information acquisition module is configured to input the driver's image to a neural network for attribute detection to perform attribute detection so as to obtain an attribute detection result output by the neural network.

When determining the driver's body shape-related information according to the detection result, the parameter information acquisition module is configured to obtain driver's race information and/or gender information corresponding to the image based on the attribute detection result.

According to some embodiments, when determining the driver's seat state information based on the body shape-related information and/or the face height information, the parameter information acquisition module is configured to obtain a preset seat adjustment conversion relationship related to a body shape and/or a face height; and determine a desired seat state corresponding to the driver based on the body shape-related information and/or the face height information and based on the seat adjustment conversion relationship, and take the desired seat state as the driver's seat state information.

According to some embodiments, when determining the driver's seat state information based on the body shape-related information and/or the face height information, the parameter information acquisition module is configured to obtain a preset first seat adjustment conversion relationship related to a face height; determine a first desired seat state corresponding to the driver based on the face height information and the first seat adjustment conversion relationship; obtain a preset second seat adjustment conversion relationship related to the body shape-related information; determine a second desired seat state based on the body shape-related information, the second seat adjustment conversion relationship and the first desired seat state; and take the second desired seat state as the driver's seat state information.

According to some embodiments, the seat state information includes at least one of the following information: seat adjustment parameter target values, seat upper and lower position information, seat front and back position information, seat left and right position information, backrest tilt angle position information, or cushion tilt angle position information.

For the working process, the setting mode, and corresponding technical effects of any embodiment of the apparatus for driver registration provided in the embodiments of the present disclosure, reference may be made to the specific descriptions of the foregoing corresponding method embodiments of the present disclosure, and details are not described herein repeatedly due to space limitation

A vehicle provided according to another aspect of the embodiments of the present disclosure includes: the apparatus for intelligent adjustment of a driving environment according to any one of the foregoing embodiments or the apparatus for driver registration according to any one of the foregoing embodiments.

An electronic device provided according to still another aspect of the embodiments of the present disclosure includes: a processor, where the processor includes the apparatus for intelligent adjustment of a driving environment according to any one of the foregoing embodiments or the apparatus for driver registration according to any one of the foregoing embodiments.

An electronic device provided according to yet another aspect of the embodiments of the present disclosure includes: a memory, configured to store executable instructions;

and a processor, configured to communicate with the memory to execute the executable instructions so as to complete operations of the method for intelligent adjustment of a driving environment according to any one of the foregoing embodiments or the method for driver registration according to any one of the foregoing embodiments.

A computer storage medium provided according to still yet another aspect of the embodiments of the present disclosure is configured to store computer-readable instructions, where when the instructions are executed, operations of the method for intelligent adjustment of a driving environment according to any one of the foregoing embodiments or the method for driver registration according to any one of the foregoing embodiments are performed.

The neural networks in the embodiments of the present disclosure may each be a multi-layer neural network (i.e., a deep neural network), for example, a multi-layer convolutional neural network, which, for example, may be any neural network model such as LeNet, AlexNet, GoogLeNet, VGG, or ResNet. The neural networks may use neural networks of the same type and structure, or may use neural networks of different types and structures. No limitation is made thereto in the embodiments of the present disclosure.

The embodiments of the present disclosure further provide an electronic device, which, for example, may be a mobile terminal, a Personal Computer (PC), a tablet computer, a server, or the like. Referring to FIG. 14 below, FIG. 14 shows a schematic structural diagram of an electronic device 1400 suitable for implementing a terminal device or a server according to the embodiments of the present disclosure. As shown in FIG. 14, the electronic device 1400 includes one or more processors, a communication part, and the like; the one or more processors are, for example, one or more Central Processing Units (CPUs) 1401 and one or more special-purpose processors; the special-purpose processor may be taken as an acceleration unit 1413, and may include, but may be not limited to, a special-purpose processor such as a Graphics Processing Unit (GPU), an FPGA, a DSP, and another ASIC chip; the processor may perform various appropriate actions and processing according to executable instructions stored in an Read-Only Memory (ROM) 1402 or executable instructions loaded from a storage section 1408 into an Random Access Memory (RAM) 1403. The communication part 1412 may include, but may be not limited to, a network card. The network card may include, but may be not limited to, an Infiniband (IB) network card.

The processor may communicate with the ROM 1402 and/or the RAM 1403 to execute the executable instructions, is connected to the communication part 1412 via a bus 1404, and communicates with other target devices via the communication part 1412, so as to complete corresponding operations of any method provided in the embodiments of the present disclosure, for example, extracting a face feature of a driver's image captured by a vehicle-mounted camera; authenticating the extracted face feature based on at least one pre-stored registered face feature; in response to successful face feature authentication, determining driving environment personalization information corresponding to the registered face feature corresponding to the face feature according to a correspondence between the pre-stored registered face feature and the driving environment personalization information; and sending the driving environment personalization information to a vehicle provided with the vehicle-mounted camera, or controlling according to the driving environment personalization information, the vehicle to adjust the driving environment.

In addition, the RAM 1403 further stores various programs and data required for operations of the apparatus. The CPU 1401, the ROM 1402, and the RAM 1403 are connected to each other via the bus 1404. In the presence of the RAM 1403, the ROM 1402 is an optional module. The RAM 1403 stores executable instructions, or writes the executable instructions into the ROM 1402 during running, where the executable instructions cause the CPU 1401 to perform corresponding operations of the foregoing communication method. An input/output (I/O) interface 1405 is also connected to the bus 1404. The communication part 1412 may be integrated, or may be configured to have a plurality of sub-modules (for example, a plurality of IB network cards) linked to the bus.

The following components are connected to the I/O interface 1405: an input section 1406 including a keyboard, a mouse, or the like; an output section 1407 including a Cathode-Ray Tube (CRT), a Liquid Crystal Display (LCD), a speaker, or the like; the storage section 1408 including a hard disk or the like; and a communication section 1409 of a network interface card including an LAN card, a modem, or the like. The communication section 1409 performs communication processing via a network such as the Internet. A drive 1410 is also connected to the I/O interface 1405 according to requirements. A removable medium 1411 such as a magnetic disk, an optical disk, a magneto-optical disk, a semiconductor memory, or the like is mounted on the drive 1410 according to requirements, so that a computer program read from the removable medium is installed on the storage section 1408 according to requirements.

It should be noted that, the architecture shown in FIG. 14 is merely an optional implementation. During specific practice, the number and types of the components in FIG. 14 may be selected, decreased, increased, or replaced according to actual requirements. Different functional components may be separated or integrated or the like. For example, the acceleration unit 1413 and the CPU 1401 may be separated, or the acceleration unit 1413 may be integrated on the CPU 1401, and the communication part may be separated from or integrated on the CPU 1401 or the acceleration unit 1413 or the like. These alternative implementations all fall within the scope of protection of the present disclosure.

Particularly, a process described above with reference to the flowchart according to the embodiments of the present disclosure may be implemented as a computer software program. For example, the embodiments of the present disclosure include a computer program product. The computer program product includes a computer program tangibly included in a machine-readable medium. The computer program includes a program code for implementing a method shown in the flowchart. The program code may include corresponding instructions for correspondingly performing operations of the method provided in the embodiments of the present disclosure, for example, extracting a face feature of a driver's image captured by a vehicle-mounted camera; authenticating the extracted face feature based on at least one pre-stored registered face feature; in response to successful face feature authentication, determining driving environment personalization information corresponding to the registered face feature corresponding to the face feature according to a correspondence between the pre-stored registered face feature and the driving environment personalization information; and sending the driving environment personalization information is sent to a vehicle provided with the vehicle-mounted camera, or controlling the vehicle to adjust the driving environment according to the driving environment personalization information. In such embodiments, the computer program is downloaded and installed from the network through the communication section 1409, and/or is installed from the removable medium 1411. The computer program, when being executed by the CPU 1401, performs operations of the foregoing functions defined in the method of the present disclosure.

The embodiments in the specification are all described in a progressive manner, for same or similar parts in the embodiments, refer to these embodiments, and each embodiment focuses on a difference from other embodiments. System embodiments correspond to the method embodiments substantially and therefore are only described briefly, and for the associated part, refer to the descriptions of the method embodiments.

The methods and apparatuses in the present disclosure may be implemented in many manners. For example, the methods and apparatuses in the present disclosure may be implemented with software, hardware, firmware, or any combination of software, hardware, and firmware. The foregoing specific sequence of operations of the method is merely for description, and unless otherwise stated particularly, is not intended to limit the operations of the method in the present disclosure. In addition, in some embodiments, the present disclosure is also implemented as programs recorded in a recording medium. The programs include machine-readable instructions for implementing the methods according to the present disclosure. Therefore, the present disclosure further covers the recording medium storing the programs for performing the methods according to the present disclosure.

The descriptions of the present disclosure are provided for the purpose of examples and description, and are not intended to be exhaustive or limit the present disclosure to the disclosed form. Many modifications and changes are obvious to a person of ordinary skill in the art. The embodiments are selected and described to better describe a principle and an actual application of the present disclosure, and to make a person of ordinary skill in the art understand the present disclosure, so as to design various embodiments with various modifications applicable to particular use.

**Claims**

1.   A method for intelligent adjustment of a driving environment, comprising:

extracting a face feature of a driver's image captured by a vehicle-mounted camera;
authenticating the extracted face feature based on at least one pre-stored registered face feature;
in response to successful face feature authentication, determining driving environment personalization information corresponding to the registered face feature corresponding to the face feature according to a correspondence between the pre-stored registered face feature and the driving environment personalization information; and
sending the driving environment personalization information to a vehicle provided with the vehicle-mounted camera, or controlling the vehicle to adjust the driving environment according to the driving environment personalization information.

2.   The method according to claim 1, wherein the driving environment personalization information comprises at least one of the following: temperature information, light information, music style information, seat state information, or loudspeaker setting information.

3.   The method according to claim 1 or 2, further comprising:
in response to a face feature authentication failure, providing registration application prompt information or authentication failure prompt information.

4.   The method according to any one of claims 1 to 3, further comprising: before authenticating the extracted face feature based on the at least one pre-stored registered face feature,
acquiring, through a driver registration process, a registered face feature and driving environment personalization information of a driver, and a correspondence therebetween.

5.   The method according to claim 4, wherein the driver registration process comprises:

acquiring a driver's image;

extracting a face feature of the image;

acquiring driving environment parameter setting information; and

storing the extracted face feature as the registered face feature, storing the driving environment parameter setting information as the driving environment personalization information of the registered face feature, and establishing and storing the correspondence between the registered face feature and the driving environment personalization information.

6. The method according to claim 5, wherein acquiring the driver's image comprises:

acquiring the driver's image through a mobile application terminal and/or a vehicle-mounted camera.

7. The method according to claim 6, wherein acquiring the driver's image through the mobile application terminal comprises:

acquiring the driver's image from at least one image stored in the mobile application terminal, or

capturing the driver's image through a camera apparatus provided on the mobile application terminal.

8. The method according to any one of claims 5 to 7, wherein acquiring the driving environment parameter setting information comprises:

receiving the driving environment parameter setting information through the mobile application terminal and/or the vehicle-mounted device.

9. The method according to any one of claims 5 to 8, wherein acquiring the driving environment parameter setting information comprises:

acquiring the driving environment parameter setting information of the vehicle through the vehicle-mounted device.

10. The method according to any one of claims 5 to 9, wherein acquiring the driving environment parameter setting information comprises:

acquiring the driving environment parameter setting information of the vehicle through the vehicle-mounted device; and

performing an update operation on the driving environment personalization information corresponding to the registered face feature based on the acquired driving environment parameter setting information.

11. The method according to any one of claims 5 to 10, further comprising:

performing at least one of the following operations on the stored driving environment personalization information according to a received management instruction: deletion, editing, or permission setting.

12. The method according to any one of claims 5 to 11, wherein the correspondence between the registered face feature and the driving environment personalization information is stored in at least one of the following locations: the mobile application terminal, a server, or the vehicle-mounted device.

13. The method according to claim 12, wherein sending the driving environment personalization information to the vehicle provided with the vehicle-mounted camera comprises:

sending the driving environment personalization information to the vehicle provided with the vehicle-mounted camera through the server or the mobile application terminal communicating with the vehicle.

14. The method according to claim 12, wherein controlling the vehicle to adjust the driving environment according to the driving environment personalization information comprises:

adjusting the driving environment of the vehicle provided with the vehicle-mounted camera through the vehicle-mounted device according to the driving environment personalization information.

15. The method according to any one of claims 5 to 14, wherein the driving environment parameter setting information comprises seat state information,

wherein acquiring the driving environment parameter setting information comprises:

performing detection on the driver's image to obtain a detection result;

determining driver's body shape-related information and/or face height information according to the detection result; and

determining driver's seat state information based on the body shape-related information and/or the face height information.

16. The method according to claim 15, wherein the detection result comprises coordinates of a face reference point, wherein performing the detection on the driver's image to obtain the detection result comprises:

performing face reference point detection on the driver's image to obtain coordinates of the face reference point of the driver in a camera coordinate system; and
wherein determining the driver's face height information according to the detection result comprises: converting the coordinates of the face reference point from the camera coordinate system to an on-board unit coordinate system; and
determining the driver's face height information based on the coordinates of the face reference point in the on-board unit coordinate system.

17. The method according to claim 16, wherein the face reference point comprises at least one face key point and/or at least one other face position point,
wherein performing the face reference point detection on the driver's image to obtain the coordinates of the face reference point of the driver in the camera coordinate system comprises:

performing the face reference point detection on the driver's image to obtain coordinates of the at least one face key point of the driver in the camera coordinate system; and/or
determining the at least one other face position point based on the coordinates of the at least one face key point.

18. The method according to any one of claims 15 to 17, wherein the body shape-related information comprises race information and/or gender information,
wherein performing the detection on the driver's image to obtain the detection result comprises:

inputting the driver's image to a neural network for attribute detection to perform attribute detection so as to obtain an attribute detection result output by the neural network; and
wherein determining the driver's body shape-related information according to the detection result comprises: obtaining driver's race information and/or gender information corresponding to the image based on the attribute detection result.

19. The method according to any one of claims 15 to 18, wherein determining the driver's seat state information based on the body shape-related information and/or the face height information comprises:

obtaining a preset seat adjustment conversion relationship related to a body shape and/or a face height; and
determining a desired seat state corresponding to the driver based on the body shape-related information and/or the face height information and based on the seat adjustment conversion relationship, and taking the desired seat state as the driver's seat state information.

20. The method according to any one of claims 15 to 18, wherein determining the driver's seat state information based on the body shape-related information and the face height information comprises:

obtaining a preset first seat adjustment conversion relationship related to a face height;
determining a first desired seat state corresponding to the driver based on the face height information and the first seat adjustment conversion relationship;
obtaining a preset second seat adjustment conversion relationship related to the body shape-related information;
determining a second desired seat state based on the body shape-related information, the second seat adjustment conversion relationship and the first desired seat state; and
taking the second desired seat state as the driver's seat state information.

21. The method according to any one of claims 15 to 20, wherein the seat state information comprises at least one of the following information: seat adjustment parameter target values, seat upper and lower position information, seat front and back position information, seat left and right position information, backrest tilt angle position information, or cushion tilt angle position information.

**22.** A method for driver registration, comprising:

acquiring a driver's image;
extracting a face feature of the image;
acquiring driving environment parameter setting information; and
storing the extracted face feature as a registered face feature, storing the driving environment parameter setting information as driving environment personalization information of the registered face feature, and establishing and storing a correspondence between the registered face feature and the driving environment personalization information.

**23.** The method according to claim 22, wherein the driving environment personalization information comprises at least one of the following: temperature information, light information, music style information, seat state information, or loudspeaker setting information.

**24.** The method according to claim 22 or 23, wherein acquiring the driver's image comprises:
acquiring the driver's image through a mobile application terminal and/or a vehicle-mounted camera.

**25.** The method according to claim 24, wherein acquiring the driver's image through the mobile application terminal comprises:

acquiring the driver's image from at least one image stored in the mobile application terminal, or
capturing the driver's image through a camera apparatus provided on the mobile application terminal.

**26.** The method according to claims 22 to 25, wherein acquiring the driving environment parameter setting information comprises:
receiving the driving environment parameter setting information through the mobile application terminal and/or the vehicle-mounted device.

**27.** The method according to claims 22 to 26, wherein acquiring the driving environment parameter setting information comprises:
acquiring the driving environment parameter setting information of the vehicle through the vehicle-mounted device.

**28.** The method according to claims 22 to 27, wherein acquiring the driving environment parameter setting information comprises:

acquiring the driving environment parameter setting information of the vehicle through the vehicle-mounted device; and
performing an update operation on the driving environment personalization information corresponding to the registered face feature based on the acquired driving environment parameter setting information.

**29.** The method according to any one of claims 22 to 28, further comprising:
performing at least one of the following operations on the stored driving environment personalization information according to a received management instruction: deletion, editing, or permission setting.

**30.** The method according to any one of claims 22 to 29, wherein the correspondence between the registered face feature and the driving environment personalization information is stored in at least one of the following locations: the mobile application terminal, a server, or the vehicle-mounted device.

**31.** The method according to any one of claims 22 to 30, wherein the driving environment parameter setting information comprises seat state information,
wherein acquiring the driving environment parameter setting information comprises:

performing detection on the driver's image to obtain a detection result;
determining driver's body shape-related information and/or face height information according to the detection result; and
determining driver's seat state information based on the body shape-related information and/or the face height information.

**32.** The method according to claim 31, wherein the detection result comprises coordinates of a face reference point, wherein performing the detection on the driver's image to obtain the detection result comprises:

> performing face reference point detection on the driver's image to obtain coordinates of the face reference point of the driver in a camera coordinate system; and
> wherein determining the driver's face height information according to the detection result comprises:

>> converting the coordinates of the face reference point from the camera coordinate system to an on-board unit coordinate system; and
>> determining the driver's face height information based on the coordinates of the face reference point in the on-board unit coordinate system.

**33.** The method according to claim 32, wherein the face reference point comprises at least one face key point and/or at least one other face position point, wherein performing the face reference point detection on the driver's image to obtain the coordinates of the face reference point of the driver in the camera coordinate system comprises:

> performing the face reference point detection on the driver's image to obtain coordinates of the at least one face key point of the driver in the camera coordinate system; and/or
> determining the at least one other face position point based on the coordinates of the at least one face key point.

**34.** The method according to any one of claims 31 to 33, wherein the body shape-related information comprises race information and/or gender information, wherein performing the detection on the driver's image to obtain the detection result comprises:

> inputting the driver's image to a neural network for attribute detection to perform attribute detection so as to obtain an attribute detection result output by the neural network; and
> wherein determining the driver's body shape-related information according to the detection result comprises:
> obtaining driver's race information and/or gender information corresponding to the image based on the attribute detection result.

**35.** The method according to any one of claims 31 to 34, wherein determining the driver's seat state information based on the body shape-related information and/or the face height information comprises:

> obtaining a preset seat adjustment conversion relationship related to a body shape and/or a face height; and
> determining a desired seat state corresponding to the driver based on the body shape-related information and/or the face height information and based on the seat adjustment conversion relationship, and taking the desired seat state as the driver's seat state information.

**36.** The method according to any one of claims 31 to 34, wherein determining the driver's seat state information based on the body shape-related information and the face height information comprises:

> obtaining a preset first seat adjustment conversion relationship related to a face height;
> determining a first desired seat state corresponding to the driver based on the face height information and the first seat adjustment conversion relationship;
> obtaining a preset second seat adjustment conversion relationship related to the body shape-related information;
> determining a second desired seat state based on the body shape-related information, the second seat adjustment conversion relationship and the first desired seat state; and
> taking the second desired seat state as the driver's seat state information.

**37.** The method according to any one of claims 31 to 36, wherein the seat state information comprises at least one of the following information: seat adjustment parameter target values, seat upper and lower position information, seat front and back position information, seat left and right position information, backrest tilt angle position information, or cushion tilt angle position information.

**38.** An apparatus for intelligent adjustment of a driving environment, comprising:

> a feature extraction unit, configured to extract a face feature of a driver's image captured by a vehicle-mounted camera;

a face feature authentication unit, configured to authenticate the extracted face feature based on at least one pre-stored registered face feature;

an environmental information acquisition unit, configured to, in response to successful face feature authentication, determine driving environment personalization information corresponding to the registered face feature corresponding to the face feature according to a correspondence between the pre-stored registered face feature and the driving environment personalization information; and

an information processing unit, configured to send the driving environment personalization information to a vehicle provided with the vehicle-mounted camera, or to control the vehicle to adjust the driving environment according to the driving environment personalization information.

39. The apparatus according to claim 38, wherein the driving environment personalization information comprises at least one of the following: temperature information, light information, music style information, seat state information, or loudspeaker setting information.

40. The apparatus according to claim 38 or 39, further comprising:
a prompt information unit, configured to, in response to a face feature authentication failure, provide registration application prompt information or authentication failure prompt information.

41. The apparatus according to any one of claims 38 to 40, further comprising:
a driver registration unit, configured to acquire, through a driver registration process, a registered face feature and driving environment personalization information of a driver, and a correspondence therebetween.

42. The apparatus according to claim 41, wherein the driver registration unit comprises:

an image acquisition module, configured to acquire a driver's image;

a face feature extraction module, configured to extract a face feature of the image;

a parameter information acquisition module, configured to acquire driving environment parameter setting information; and

a registration information storage module, configured to store the extracted face feature as the registered face feature, store the driving environment parameter setting information as the driving environment personalization information of the registered face feature, and establish and store the correspondence between the registered face feature and the driving environment personalization information.

43. The apparatus according to claim 42, wherein the image acquisition module is configured to acquire the driver's image through a mobile application terminal and/or a vehicle-mounted camera.

44. The apparatus according to claim 43, the image acquisition module is configured to acquire the driver's image from at least one image stored in the mobile application terminal, or capture the driver's image through a camera apparatus provided on the mobile application terminal.

45. The apparatus according to any one of claims 42 to 44, wherein the parameter information acquisition module is configured to receive the driving environment parameter setting information through the mobile application terminal and/or the vehicle-mounted device.

46. The apparatus according to any one of claims 42 to 45, wherein the parameter information acquisition module is configured to acquire the driving environment parameter setting information of the vehicle through the vehicle-mounted device.

47. The apparatus according to any one of claims 42 to 46, wherein the parameter information acquisition module is configured to acquire the driving environment parameter setting information of the vehicle through the vehicle-mounted device, and perform an update operation on the driving environment personalization information corresponding to the registered face feature based on the acquired driving environment parameter setting information.

48. The apparatus according to any one of claims 42 to 47, wherein the driver registration unit further comprises:
an information management module, configured to perform at least one of the following operations on the stored driving environment personalization information according to a received management instruction: deletion, editing, or permission setting.

**49.** The apparatus according to any one of claims 42 to 48, wherein the correspondence between the registered face feature and the driving environment personalization information is stored in at least one of the following locations: the mobile application terminal, a server, or the vehicle-mounted device.

**50.** The apparatus according to claim 49, wherein when sending the driving environment personalization information to the vehicle provided with the vehicle-mounted camera, the information processing unit is configured to send the driving environment personalization information to the vehicle provided with the vehicle-mounted camera through the server or the mobile application terminal communicating with the vehicle.

**51.** The apparatus according to claim 49, wherein when controlling the vehicle to adjust the driving environment according to the driving environment personalization information, the information processing unit is configured to adjust the driving environment of the vehicle provided with the vehicle-mounted camera through the vehicle-mounted device according to the driving environment personalization information.

**52.** The apparatus according to any one of claims 42 to 51, wherein the driving environment parameter setting information comprises seat state information,
wherein the parameter information acquisition module is configured to perform detection on the driver's image to obtain a detection result; determine driver's body shape-related information and/or face height information according to the detection result; and determine driver's seat state information based on the body shape-related information and/or the face height information.

**53.** The apparatus according to claim 52, wherein the detection result comprises coordinates of a face reference point,
wherein when performing the detection on the driver's image to obtain the detection result, the parameter information acquisition module is configured to perform face reference point detection on the driver's image to obtain coordinates of the face reference point of the driver in a camera coordinate system; and
wherein when determining the driver's face height information according to the detection result, the parameter information acquisition module is configured to convert the coordinates of the face reference point from the camera coordinate system to an on-board unit coordinate system, and determine the driver's face height information based on the coordinates of the face reference point in the on-board unit coordinate system.

**54.** The apparatus according to claim 53, wherein the face reference point comprises at least one face key point and/or at least one other face position point,
wherein when performing the face reference point detection on the driver's image to obtain the coordinates of the face reference point of the driver in the camera coordinate system, the parameter information acquisition module is configured to perform the face reference point detection on the driver's image to obtain coordinates of the at least one face key point of the driver in the camera coordinate system; and/or determine the at least one other face position point based on the coordinates of the at least one face key point.

**55.** The apparatus according to any one of claims 52 to 54, wherein the body shape-related information comprises race information and/or gender information,
wherein when performing the detection on the driver's image to obtain the detection result, the parameter information acquisition module is configured to input the driver's image to a neural network for attribute detection to perform attribute detection so as to obtain an attribute detection result output by the neural network;
when determining the driver's body shape-related information according to the detection result, the parameter information acquisition module is configured to obtain driver's race information and/or gender information corresponding to the image based on the attribute detection result.

**56.** The apparatus according to any one of claims 52 to 55, wherein when determining the driver's seat state information based on the body shape-related information and/or the face height information, the parameter information acquisition module is configured to obtain a preset seat adjustment conversion relationship related to a body shape and/or a face height; and determine a desired seat state corresponding to the driver based on the body shape-related information and/or the face height information and based on the seat adjustment conversion relationship, and take the desired seat state as the driver's seat state information.

**57.** The apparatus according to any one of claims 52 to 55, wherein when determining the driver's seat state information based on the body shape-related information and/or the face height information, the parameter information acquisition module is configured to: obtain a preset first seat adjustment conversion relationship related to a face height; determine a first desired seat state corresponding to the driver based on the face height information and the first seat adjustment conversion relationship; obtain a preset second seat adjustment conversion relationship related to the body shape-related information; determine a second desired seat state based on the body shape-related information, the second seat adjustment conversion relationship and the first desired seat state; and take the second desired seat state as the driver's seat state information.

58. The apparatus according to any one of claims 52 to 57, wherein the seat state information comprises at least one of the following information: seat adjustment parameter target values, seat upper and lower position information, seat front and back position information, seat left and right position information, backrest tilt angle position information, or cushion tilt angle position information.

59. An apparatus for driver registration, comprising:

an image acquisition module, configured to acquire a driver's image;
a face feature extraction module, configured to extract a face feature of the image;
a parameter information acquisition module, configured to acquire driving environment parameter setting information; and
a registration information storage module, configured to store the extracted face feature as a registered face feature, store the driving environment parameter setting information as driving environment personalization information of the registered face feature, and establish and store a correspondence between the registered face feature and the driving environment personalization information.

60. The apparatus according to claim 59, wherein the driving environment personalization information comprises at least one of the following: temperature information, light information, music style information, seat state information, or loudspeaker setting information.

61. The apparatus according to claim 59 or 60, wherein the image acquisition module is configured to acquire the driver's image through a mobile application terminal and/or a vehicle-mounted camera.

62. The apparatus according to claim 61, the image acquisition module is configured to acquire the driver's image from at least one image stored in the mobile application terminal, or capture the driver's image through a camera apparatus provided on the mobile application terminal.

63. The apparatus according to any one of claims 59 to 62, wherein the parameter information acquisition module is configured to receive the driving environment parameter setting information through the mobile application terminal and/or the vehicle-mounted device.

64. The apparatus according to any one of claims 59 to 63, wherein the parameter information acquisition module is configured to acquire the driving environment parameter setting information of the vehicle through the vehicle-mounted device.

65. The apparatus according to any one of claims 59 to 64, wherein the parameter information acquisition module is configured to acquire the driving environment parameter setting information of the vehicle through the vehicle-mounted device; and perform an update operation on the driving environment personalization information corresponding to the registered face feature based on the acquired driving environment parameter setting information.

66. The apparatus according to any one of claims 59 to 65, further comprising:
an information management module, configured to perform at least one of the following operations on the stored driving environment personalization information according to a received management instruction: deletion, editing, or permission setting.

67. The apparatus according to any one of claims 59 to 66, wherein the correspondence between the registered face feature and the driving environment personalization information is stored in at least one of the following locations: the mobile application terminal, a server, or the vehicle-mounted device.

68. The apparatus according to any one of claims 59 to 67, wherein the driving environment parameter setting information comprises seat state information,
wherein the parameter information acquisition module is configured to perform detection on the driver's image to obtain a detection result; determine driver's body shape-related information and/or face height information according to the detection result; and determine driver's seat state information based on the body shape-related information and/or the face height information.

69. The apparatus according to claim 68, wherein the detection result comprises coordinates of a face reference point, wherein when performing the detection on the driver's image to obtain the detection result, the parameter information acquisition module is configured to perform face reference point detection on the driver's image to obtain coordinates of the face reference point of the driver in a camera coordinate system; and

wherein when determining the driver's face height information according to the detection result, the parameter information acquisition module is configured to: convert the coordinates of the face reference point from the camera coordinate system to an on-board unit coordinate system; and

determine the driver's face height information based on the coordinates of the face reference point in the on-board unit coordinate system.

70. The apparatus according to claim 69, wherein the face reference point comprises at least one face key point and/or at least one other face position point,

wherein when performing the face reference point detection on the driver's image to obtain the coordinates of the face reference point of the driver in the camera coordinate system, the parameter information acquisition module is configured to perform the face reference point detection on the driver's image to obtain coordinates of the at least one face key point of the driver in the camera coordinate system; and/or determine the at least one other face position point based on the coordinates of the at least one face key point.

71. The apparatus according to any one of claims 68 to 70, wherein the body shape-related information comprises race information and/or gender information,

wherein when performing the detection on the driver's image to obtain the detection result, the parameter information acquisition module is configured to input the driver's image to a neural network for attribute detection to perform attribute detection so as to obtain an attribute detection result output by the neural network; and

wherein when determining the driver's body shape-related information according to the detection result, the parameter information acquisition module is configured to obtain driver's race information and/or gender information corresponding to the image based on the attribute detection result.

72. The apparatus according to any one of claims 68 to 71, wherein when determining the driver's seat state information based on the body shape-related information and/or the face height information, the parameter information acquisition module is configured to obtain a preset seat adjustment conversion relationship related to a body shape and/or a face height; and determine a desired seat state corresponding to the driver based on the body shape-related information and/or the face height information and based on the seat adjustment conversion relationship, and take the desired seat state as the driver's seat state information.

73. The apparatus according to any one of claims 68 to 71, wherein when determining the driver's seat state information based on the body shape-related information and/or the face height information, the parameter information acquisition module is configured to obtain a preset first seat adjustment conversion relationship related to a face height; determine a first desired seat state corresponding to the driver based on the face height information and the first seat adjustment conversion relationship; obtain a preset second seat adjustment conversion relationship related to the body shape-related information; determine a second desired seat state based on the body shape-related information, the second seat adjustment conversion relationship and the first desired seat state; and take the second desired seat state as the driver's seat state information.

74. The apparatus according to any one of claims 68 to 73, wherein the seat state information comprises at least one of the following information: seat adjustment parameter target values, seat upper and lower position information, seat front and back position information, seat left and right position information, backrest tilt angle position information, or cushion tilt angle position information.

75. A vehicle, comprising the apparatus for intelligent adjustment of a driving environment according to any one of claims 38 to 58 or the apparatus for driver registration according to any one of claims 59 to 74.

76. An electronic device, comprising a processor, wherein the processor comprises the apparatus for intelligent adjustment of a driving environment according to any one of claims 38 to 58 or the apparatus for driver registration according to any one of claims 59 to 74.

**77.** An electronic device, comprising: a memory, configured to store executable instructions; and a processor, configured to communicate with the memory to execute the executable instructions so as to complete the method for intelligent adjustment of a driving environment according to any one of claims 1 to 21 or the method for driver registration according to any one of claims 22 to 37.

**78.** A computer storage medium, configured to store computer-readable instructions, wherein when the instructions are executed, operations of the method for intelligent adjustment of a driving environment according to any one of claims 1 to 21 or the method for driver registration according to any one of claims 22 to 37 are performed.

**79.** A computer program product, comprising a computer-readable code, wherein when the computer-readable code runs in a device, a processor in the device executes instructions for implementing the method for intelligent adjustment of a driving environment according to any one of claims 1 to 21 or the method for driver registration according to any one of claims 22 to 37.

Extract a face feature of a driver's image captured by a vehicle-mounted camera ⌐110

Authenticate the extracted face feature based on at least one pre-stored registered face feature ⌐120

In response to successful face feature authentication, determine driving environment personalization information corresponding to the registered face feature corresponding to the face feature according to a correspondence between the pre-stored registered face feature and the driving environment personalization information ⌐130

Send the driving environment personalization information to a vehicle provided with the vehicle-mounted camera, or control the vehicle to adjust the driving environment according to the driving environment personalization information ⌐140

FIG. 1

Extract a face feature of a driver's image captured by a vehicle-mounted camera ⌐210

Acquire, through a driver registration process, a registered face feature and driving environment personalization information of a driver, and a correspondence there between ⌐220

Authenticate the extracted face feature based on at least one pre-stored registered face feature ⌐230

In response to successful face feature authentication, determine driving environment personalization information corresponding to the registered face feature corresponding to the face feature according to a correspondence between the pre-stored registered face feature and the driving environment personalization information ⌐240

Send the driving environment personalization information to a vehicle provided with the vehicle-mounted camera, or control the vehicle to adjust the driving environment according to the driving environment personalization information ⌐250

FIG. 2

FIG. 3

Perform detection on the driver's image to obtain a detection result — 410

Determine driver's body shape-related information and/or face height information based on the detection result — 420

Determine driver's seat state information based on the body shape-related information and/or the face height information — 430

FIG. 4

FIG. 5

FIG. 6

FIG. 7

FIG. 8

| | |
|---|---|
| Obtain a preset first seat adjustment conversion relationship related to a face height | 901 |

↓

| | |
|---|---|
| Determine a first desired seat state corresponding to the driver based on the face height information and the first seat adjustment conversion relationship | 902 |

↓

| | |
|---|---|
| Obtain a preset second seat adjustment conversion relationship related to the body shape-related information | 903 |

↓

| | |
|---|---|
| Determine a second desired seat state based on the body shape-related information, the second seat adjustment conversion relationship, and the first desired seat state | 904 |

↓

| | |
|---|---|
| Take the second desired seat state as the driver's seat state information | 905 |

FIG. 9

FIG. 10

| Feature extraction unit | — | Face feature authentication unit | — | Environmental information acquisition unit | — | Information processing unit |
|---|---|---|---|---|---|---|
| 1101 | | 1102 | | 1103 | | 1104 |

FIG. 11

| | |
|---|---|
| Acquire a driver's image | 1210 |

↓

| | |
|---|---|
| Extract a face feature of the image | 1220 |

↓

| | |
|---|---|
| Acquire driving environment parameter setting information | 1230 |

↓

| | |
|---|---|
| Store the extracted face feature as a registered face feature, store the driving environment parameter setting information as driving environment personalization information of the registered face feature, and establish and store a correspondence between the registered face feature and the driving environment personalization information | 1240 |

FIG. 12

| 1301 | | 1302 | | 1303 | | 1304 |
|---|---|---|---|---|---|---|
| Image acquisition module | → | Face feature extraction module | → | Parameter information acquisition module | → | Registration information storage module |

FIG. 13

<u>1400</u>

| 1401 | 1413 | 1402 | 1412 | 1403 |
|---|---|---|---|---|
| CPU | Acceleration unit | ROM | Communication part | RAM |

↕ ↕ ↕ ↕ ↕

⟺ 1404

↕

| I/O interface | 1405 |
|---|---|

↕ ↕ ↕ ↕ ↕

| Input section | Output section | Storage section | Communication section | Drive | 1410 |
|---|---|---|---|---|---|
| 1406 | 1407 | 1408 | 1409 | | |

↑

| Removable medium | 1411 |
|---|---|

FIG. 14

## INTERNATIONAL SEARCH REPORT

| | International application No. |
|---|---|
| | **PCT/CN2019/111930** |

### A. CLASSIFICATION OF SUBJECT MATTER

B60R 16/037(2006.01)i;  B60N 2/02(2006.01)i

According to International Patent Classification (IPC) or to both national classification and IPC

### B. FIELDS SEARCHED

Minimum documentation searched (classification system followed by classification symbols)

B60R16; B60N2

Documentation searched other than minimum documentation to the extent that such documents are included in the fields searched

Electronic data base consulted during the international search (name of data base and, where practicable, search terms used)

CNABS; VEN; DWPI; CNKI: 脸, 面部, 驾驶员, 识别, 认证, 身份, 匹配, 调整, 调节, 图像, 摄像, 相机, 座椅, 个性化; face, driver, identif+, match+, adjust+, image, camera, seat

### C. DOCUMENTS CONSIDERED TO BE RELEVANT

| Category* | Citation of document, with indication, where appropriate, of the relevant passages | Relevant to claim No. |
|---|---|---|
| X | CN 106004735 A (BOE TECHNOLOGY GROUP CO., LTD.) 12 October 2016 (2016-10-12) description, paragraphs 0041-0054 and 0064-0069, and figures 1 and 3 | 1-4, 38-41, 75-79 |
| Y | CN 106004735 A (BOE TECHNOLOGY GROUP CO., LTD.) 12 October 2016 (2016-10-12) description, paragraphs 0041-0054 and 0064-0069, and figures 1 and 3 | 5-21, 42-58 |
| X | CN 105774703 A (SHENZHEN INSTITUTES OF ADVANCED TECHNOLOGY, CHINESE ACADEMY OF SCIENCES) 20 July 2016 (2016-07-20) description, paragraphs 0055-0143, and figures 1-2 | 22-37, 59-74, 75-79 |
| Y | CN 105774703 A (SHENZHEN INSTITUTES OF ADVANCED TECHNOLOGY, CHINESE ACADEMY OF SCIENCES) 20 July 2016 (2016-07-20) description, paragraphs 0055-0143, and figures 1-2 | 5-21, 42-58 |
| A | CN 103761462 A (ANHUI USTC IFLYTEK CO., LTD.) 30 April 2014 (2014-04-30) entire document | 1-79 |
| A | CN 106564449 A (JRD COMMUNICATION INC.) 19 April 2017 (2017-04-19) entire document | 1-79 |
| A | CN 107316363 A (CHERY AUTOMOBILE CO., LTD.) 03 November 2017 (2017-11-03) entire document | 1-79 |

☑ Further documents are listed in the continuation of Box C.     ☑ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **08 January 2020** | **31 January 2020** |

| Name and mailing address of the ISA/CN | Authorized officer |
|---|---|
| **China National Intellectual Property Administration** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

## INTERNATIONAL SEARCH REPORT

| International application No. |
|---|
| **PCT/CN2019/111930** |

**C.     DOCUMENTS CONSIDERED TO BE RELEVANT**

| Category* | Citation of document, with indication, where appropriate, of the relevant passages | Relevant to claim No. |
|---|---|---|
| A | JP 2015101281 A (AUTO NETWORK GIJUTSU KENKYUSHO et al.) 04 June 2015 (2015-06-04) entire document | 1-79 |
| A | KR 20180053893 A (HYUNDAI MOTOR CO., LTD.) 24 May 2018 (2018-05-24) entire document | 1-79 |

Form PCT/ISA/210 (second sheet) (January 2015)

**INTERNATIONAL SEARCH REPORT**
Information on patent family members

International application No.

**PCT/CN2019/111930**

| Patent document cited in search report | | | Publication date (day/month/year) | Patent family member(s) | | | Publication date (day/month/year) |
|---|---|---|---|---|---|---|---|
| CN | 106004735 | A | 12 October 2016 | WO | 2018000999 | A1 | 04 January 2018 |
| | | | | US | 2019016281 | A1 | 17 January 2019 |
| CN | 105774703 | A | 20 July 2016 | None | | | |
| CN | 103761462 | A | 30 April 2014 | None | | | |
| CN | 106564449 | A | 19 April 2017 | None | | | |
| CN | 107316363 | A | 03 November 2017 | None | | | |
| JP | 2015101281 | A | 04 June 2015 | None | | | |
| KR | 20180053893 | A | 24 May 2018 | None | | | |

Form PCT/ISA/210 (patent family annex) (January 2015)

**REFERENCES CITED IN THE DESCRIPTION**

**Patent documents cited in the description**

- CN 201811224337